# EUROPÄISCHE PATENTSCHRIFT

(11) **EP 2 517 929 B1**
(45) Veröffentlichungstag und Bekanntmachung des Hinweises auf die Patenterteilung: **02.08.2023**
(21) Anmeldenummer: 12161372.3
(22) Anmeldetag: 27.03.2012
(51) Int. Cl.: B60Q 1/14, F21S 41/143, F21S 41/663, F21S 41/153

(54) **Kraftfahrzeugscheinwerfer für eine Fernlicht-Lichtverteilung**
Headlight of a motor vehicle for a high beam light distribution
Projecteur de véhicule automobile pour distribution lumineuse de feux de route

(30) Priorität: 27.04.2011 DE 102011017632; 07.06.2011 DE 102011077132
(43) Veröffentlichungstag der Anmeldung: 31.10.2012
(73) Patentinhaber: Marelli Automotive Lighting Reutlingen (Germany) GmbH, 72762 Reutlingen (DE)
(72) Erfinder: Hamm, Michael, 72800 Eningen u.A. (DE); Rosenhahn, Ernst-Olaf, 72147 Nehren (DE); Stefanov, Emil P., 72762 Reutlingen (DE)
(74) Vertreter: DREISS Patentanwälte PartG mbB

(56) Entgegenhaltungen:
- EP-A1- 2 278 217
- EP-A2- 2 037 167
- EP-A2- 2 280 215
- DE-A1-102008 036 193
- US-A1- 2007 201 241
- US-A1- 2008 316 759

## Beschreibung

Die vorliegende Erfindung betrifft einen Kraftfahrzeugscheinwerfer zur Erzeugung einer Fernlicht-Lichtverteilung nach dem Oberbegriff des Anspruchs 1. Ein solcher Scheinwerfer ist aus der US 2007/201241 A1 bekannt. Der Scheinwerfer umfasst ein Lichtmodul, das zur Erzeugung einer Grundverteilung der Fernlicht-Lichtverteilung ausgebildet ist. Die Fernlicht-Lichtverteilung wird durch eine Überlagerung der Grundverteilung und einer durch mindestens ein anderes Modul erzeugten Spotverteilung gebildet.

Aus der EP 278 217 A1 ist ein Scheinwerfer bekannt, dessen Lichtverteilung sich aus einer Reihe beleuchteter Segmente zusammensetzt, deren längs einer horizontalen Richtung angeordnete Segmente in vertikaler Richtung verschieden hoch sind, wobei die Höhe in der Mitte maximal ist und nach außen hin abnimmt. Lichtmodule bzw. Kraftfahrzeugscheinwerfer zur Erzeugung von Fernlicht, bei denen das Fernlicht durch eine Überlagerung einer gebündelten Spotverteilung und einer diffusen Grundverteilung gebildet wird, sind in unterschiedlichen Ausführungsformen aus dem Stand der Technik bekannt. Ein äußerer Rand der Spotverteilung läuft seitlich relativ weich aus, hat aber einen steileren Anstieg zu einer Vertikalen als die Grundverteilung. Die Grundverteilung hat eine größere Erstreckung in horizontaler und vertikaler Richtung als die Spotverteilung. Die maximale Beleuchtungsstärke der Grundverteilung ist geringer als die der Spotverteilung, die eine höhere Reichweite als die Grundverteilung aufweist. Die Grundverteilung leuchtet nicht nur einen Bereich um die Spotverteilung herum nach Art eines Halos (Lichtrings) mit weich auslaufendem Rand diffus aus, sondern überlagert auch die Spotverteilung und trägt somit zur Erreichung der gewünschten Beleuchtungsstärke Maxima im Bereich der Spotverteilung bei.

Die Spotverteilung kann auf eine beliebige Art und Weise erzielt werden. Aus dem Stand der Technik sind verschiedene Lichtmodule zur Erzeugung einer Spotverteilung bekannt. Diese können als Projektions- oder als Reflexionssysteme ausgebildet sein und können als Lichtquellen Glühlampen, Gasentladungslampen, Halbleiterlichtquellen, insbesondere Leuchtdioden (LEDs), oder andere aufweisen.

Entsprechende aus dem Stand der Technik bekannte Fernlicht-Konzepte sind bspw. die folgenden:
- Komplettes Fernlicht aus einer oder mehreren Reflektorkammern ohne vertikale Unterteilung.

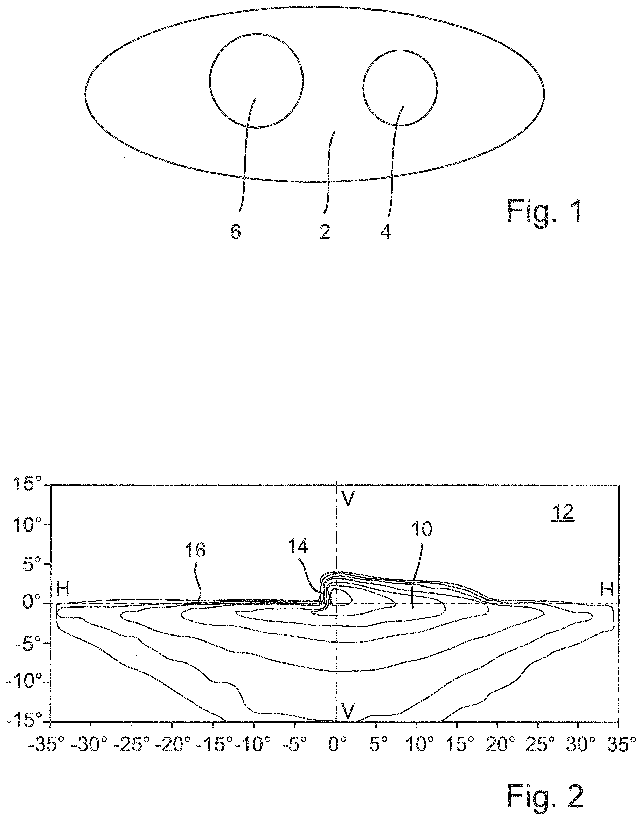

Ein entsprechender Scheinwerfer mit einem Lichtmodul zur Erzeugung eines typischen Halogenfernlichts, eines Fernlichts eines Bi-Xenon-Scheinwerfers, oder eines Fernlichts eines Leuchtdioden (LED)-Scheinwerfers ist beispielhaft in Figur 1 dargestellt und in seiner Gesamtheit mit dem Bezugszeichen 2 bezeichnet. Das Lichtmodul zur Erzeugung des Fernlichts, das bspw. als ein Reflexions- oder als ein Projektionsmodul ausgebildet sein kann, ist mit dem Bezugszeichen 4 bezeichnet. Der Scheinwerfer 2 kann ein weiteres Lichtmodul 6 zur Erzeugung eines Abblendlichts aufweisen. Ein Fernlichtmodul mit LED-Lichtquellen kann in verschiedene Module, bspw. verschiedene Fernlichtreflektorkammern, unterteilt sein, wobei mindestens eines der Module bzw. eine der Kammern zur Erzeugung der Spotverteilung und mindestens ein anderes der Module bzw. eine andere der Kammern zur Erzeugung der Grundverteilung dient.

### - Teilfernlicht

Beim Teilfernlicht wird in einem Xenon-Fernlicht-Modul ein Bereich der Fernlicht-Lichtverteilung gezielt abgeschattet. Dabei schatten bewegliche, insbesondere um eine horizontale Drehachse klappbare, ebene Blendenanordnungen und/oder Blendenwalzen einen Bereich des Fernlichts ab, in dem andere Verkehrsteilnehmer detektiert wurden. Dadurch entstehen helle bzw. dunkle Zonen mit ausgedehnten vertikalen Hell-/Dunkelgrenzen. Die Blenden zur Erzeugung der Zonen werden mit einem geeigneten Aktor, bspw. mit einem Schrittmotor, so bewegt, dass ein vorausfahrendes Fahrzeug oder ein entgegenkommendes Fahrzeug im Bereich der dunklen Zone liegt.

Ein entsprechendes Anwendungsbeispiel ist bspw. ein Scheinwerfer mit einem Bifunktionsmodul mit Xenon-Lichtquelle und einer Blendenanordnung umfassend mehrere Blendenelemente, die in der Ebene der Blendenanordnung mittels einer Kulissenführung relativ zueinander verschiebbar (z.B. verschwenkbar) sind. Die Blendenanordnung mit Kulissenführung ist aus der DE 10 2005 012 303 A1 bekannt. Ein entsprechendes Lichtmodul ist bspw. aus der EP 1 640 658 A2 bekannt. Durch Verschieben der Blendenelemente relativ zueinander ergibt sich ein variabler Verlauf der horizontalen Hell-/ Dunkelgrenze. Das Lichtmodul erzeugt alleine eine Fernlichtverteilung. Dabei ergibt sich das Fernlicht somit nicht aus einer Überlagerung einer Spot- und einer Grundverteilung. Bifunktion bedeutet, dass das Lichtmodul sowohl zur Erzeugung von Abblendlicht als auch von Fernlicht genutzt werden kann. Die bekannten Scheinwerfer erzeugen also neben Fernlicht auch AFS (Adaptive Frontlighting System)-konformes Abblendlicht gemäß Regelung 123 ECE.

Figur 2 zeigt beispielhaft die Lichtverteilung 10 eines Teilfernlichts, wie es von einem Scheinwerfer einer Scheinwerferanlage eines Kraftfahrzeugs auf einem in einem Abstand vor dem Fahrzeug angeordneten Messschirm 12 erzeugt wird. Auf dem Messschirm 12 ist bei 0° vertikal eine Horizontale HH und bei 0° horizontal eine Vertikale W eingezeichnet. Der andere Scheinwerfer der Scheinwerferanlage erzeugt eine zu der dargestellten Lichtverteilung 10 um die Vertikale VV gespiegelte Lichtverteilung. Die von einem Scheinwerfer bzw. dem entsprechenden Lichtmodul erzeugte Teilfernlicht-Lichtverteilung 10 gemäß Figur 2 umfasst eine vertikale Hell-/ Dunkelgrenze 14 und eine daran angrenzende horizontale Hell-/ Dunkelgrenze 16, die wenige 1/10 Grad (z.B. 0,57°) unterhalb der Horizontalen HH verläuft. Die horizontale Position der vertikalen Hell-/ Dunkelgrenzen 14 der Teilfernlicht-Lichtverteilungen 10 kann bspw. durch horizontales Verschwenken des entsprechenden Lichtmoduls bzw. des gesamten Scheinwerfers variiert werden. Durch Überlagerung eines linken und eines rechten Teilfernlichts 10 entstehen ausgeblendete Zonen mit variabler Breite und Orientierung im Straßenraum vor dem Kraftfahrzeug.

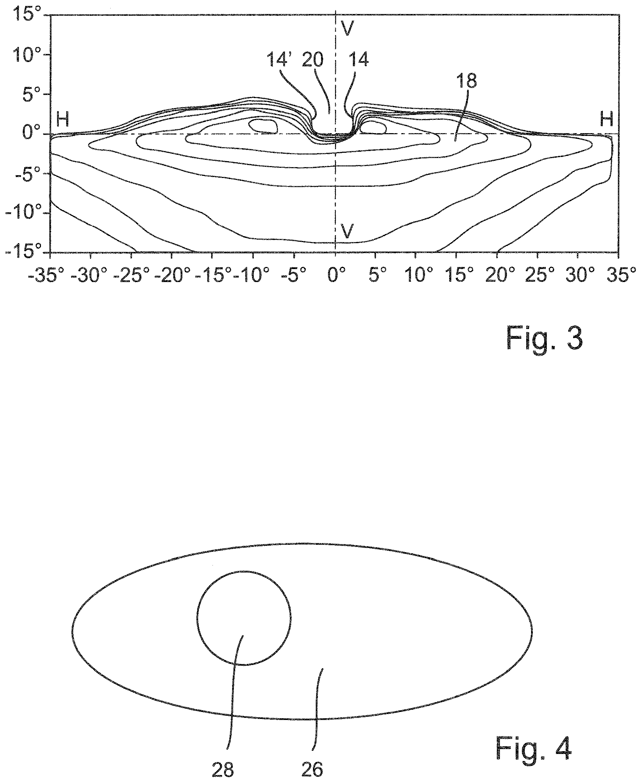

Eine entsprechende Gesamt-Teilfernlicht-Lichtverteilung 18 mit einer ausgeblendeten Zone 20 ist beispielhaft in Figur 3 gezeigt. Die vertikale Hell-/ Dunkelgrenze der von dem anderen Scheinwerfer der Scheinwerferanlage erzeugten und zu der Teilfernlicht-Lichtverteilung 10 aus Figur 2 gespiegelten Lichtverteilung ist in Figur 3 mit dem Bezugszeichen 14' bezeichnet. Charakteristisch ist, dass die Scheinwerfer zur Erzeugung dieser Lichtverteilung ein bzw. zwei Projektions- bzw. Reflexions-Module umfassen und jedes Modul eine scharfe vertikale Hell-/ Dunkelgrenze 14, 14' erzeugt. In jedem Scheinwerfer entsteht dabei aus einem einzigen Modul eine Teilfernlicht-Lichtverteilung mit vertikaler Hell-/ Dunkelgrenze 14; 14'.

Ein entsprechender Scheinwerfer mit einem Xenon-Bifunktions-Modul ist beispielhaft in Figur 4 gezeigt und in seiner Gesamtheit mit dem Bezugszeichen 26 bezeichnet. Das Lichtmodul zur Erzeugung des Teilfernlichts ist mit dem Bezugszeichen 28 bezeichnet. Das Xenon-Bifunktions-Modul 26 erzeugt neben einer abgeblendeten Lichtverteilung unterhalb einer horizontalen Hell-/ Dunkelgrenze die gesamte Fernlicht-Lichtverteilung als ganzes, d.h. nicht unterteilt nach Spot- und Grundverteilung.

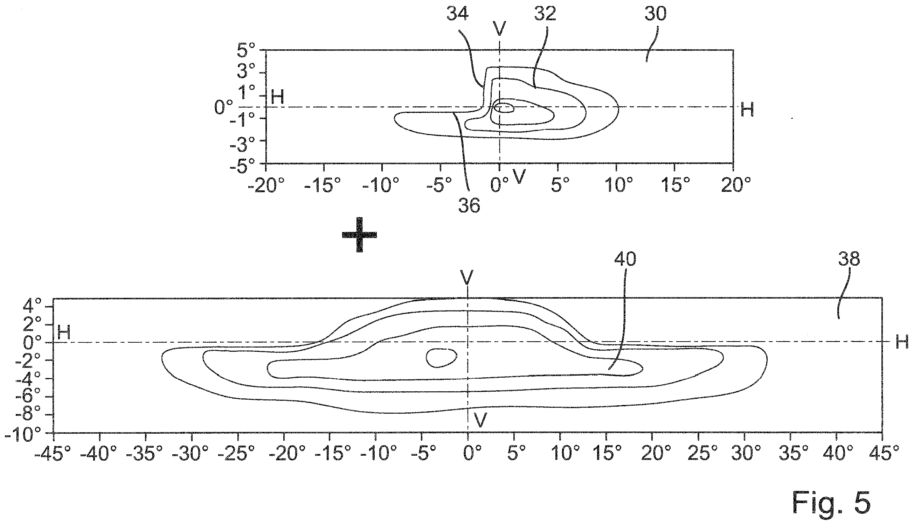

Ein LED-Bifunktions-Modul arbeitet analog zum Xenon-Bifunktions-Modul und stellt ebenfalls eine vertikale Hell-/ Dunkelgrenze zur Verfügung. Es ist in der Ausdehnung aber relativ schmal und konzentriert sich auf den Spotbereich der Lichtverteilung. Dabei kann es eine Spotverteilung sowohl für Abblendlicht als auch für Fernlicht erzeugen. Zum Umschalten zwischen Abblendlichtspot und Fernlichtspot kann das LED-Bifunktions-Modul über eine bewegbare oder veränderbare Blendenanordnung, bspw. eine um eine horizontale Drehachse drehbare Walzenblende, im Strahlengang verfügen. Eine durch ein LED-Bifunktions-Modul erzeugte Spotverteilung, wie sie sich auf einem Messschirm 30 ergibt, ist beispielhaft in Figur 5 oben gezeigt und in der Gesamtheit mit dem Bezugszeichen 32 bezeichnet. Die vertikale Hell-/ Dunkelgrenze ist mit dem Bezugszeichen 34, die angrenzende horizontale Hell-/ Dunkelgrenze mit dem Bezugszeichen 36 bezeichnet. Ein entsprechendes Lichtmodul ist bspw. aus der DE 10 2007 049 309 A1 bekannt.

Eine Besonderheit des LED-Bifunktions-Moduls und anderer derartiger Konzepte mit LEDs als Lichtquellen ist das Erfordernis eines zweiten Fernlichts, das mit geringerer Intensität und technischem Anspruch (z.B. keine vertikale Hell-/ Dunkelgrenze) die spotartige Fernlichtverteilung des LED-Bifunktions-Moduls ergänzt. Eine solche durch ein entsprechendes zweites Fernlicht-Modul erzeugte Grundverteilung, wie sie sich auf einem Messschirm 38 ergibt, ist beispielhaft in Figur 5 unten gezeigt und mit dem Bezugszeichen 40 bezeichnet. Das zweite Fernlicht-Modul zur Erzeugung der Grundverteilung kann bspw. als ein LED-Projektionsmodul mit einer Walzenblende ausgebildet sein.

Da ein einzelner LED-Chip nach derzeitigem Stand der Technik ca. 250 Lumen (lm) abgibt, eine Gasentladungslampe aber über 3.000 lm, werden zur Erzeugen der gewünschten bzw. gesetzlich vorgeschriebenen Beleuchtungsstärkewerte mehrere LED-Chips benötigt. Je mehr Chips dicht nebeneinander sitzen, umso höher wird jedoch auch der thermische Aufwand sowie der Aufwand zur Kontaktierung der LED-Chips. Ein Modul mit etwa 14 bis 15 eng nebeneinander angeordneten Chips wäre nach heutigem technischen Stand mit sehr hohem Kühlungsaufwand verbunden und zudem lichttechnisch schwierig handhabbar. Das bekannte LED-Bifunktions-Modul von Automotive Lighting setzt daher nur vier LED-Chips ein. Eine höhere LED-Dichte ist nicht bekannt.

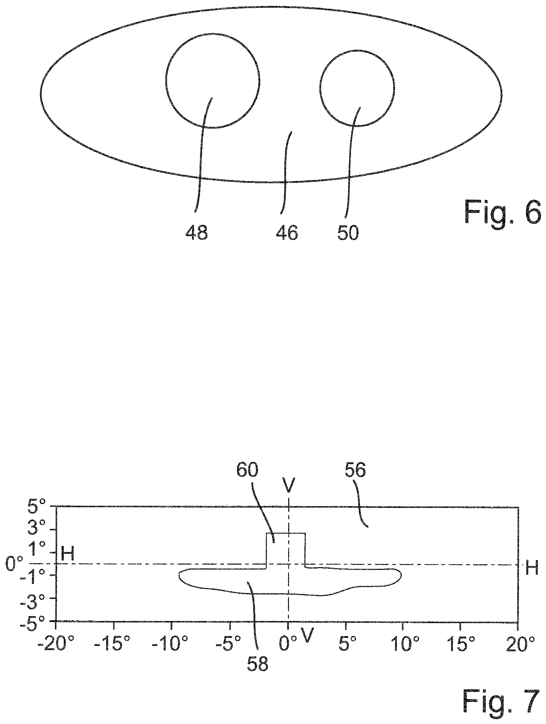

Das zur Erzeugung eines Fernlichts mit einem LED-Bifunktions-Modul erforderliche breite Ergänzungsfernlicht oder Fernlicht-Grundverteilung (vgl. Figur 5 unten) wird in der Regel aus einem zweiten Modul erzeugt. Ein entsprechender Scheinwerfer ist schematisch in Figur 6 gezeigt und in seiner Gesamtheit mit dem Bezugszeichen 46 bezeichnet. Das LED-Bifunktions-Modul (Spot-Modul) 48 erzeugt die Lichtverteilung mit vertikaler Hell-/ Dunkelgrenze 34 als Teilfernlicht bei Gegenverkehr, und das Grundlicht-Modul 50 erzeugt ein quasi symmetrisches Fernlicht-Grundverteilung 40 zur Ergänzung.

### - Markierungslicht

Durch einen zusätzlichen Schlitz in den Xenon- bzw. LED-Bifunktions-Modulen ist auch ein einziger hell ausgeleuchteter Streifen pro Modul erzeugbar. Dieser hell ausgeleuchtete Streifen kann als sog. Markierungslicht zum gezielten Ausleuchten von auf der Fahrbahn oder daneben vor dem Fahrzeug befindlichen und detektierten Objekten (Personen oder Gegenständen) mit einer fernlicht-ähnlichen Intensität genutzt werden. Eine entsprechende, sich auf einem Messschirm 56 ergebende Lichtverteilung eines Markierungslichts ist in Figur 7 beispielhaft gezeigt und in ihrer Gesamtheit mit dem Bezugszeichen 58 bezeichnet. Der helle Streifen 60 hat eine horizontale Erstreckung von ca. 1° bis 4° auf dem Messschirm 56 bzw. auf der Fahrbahn und erstreckt sich in vertikaler Richtung bis in die eigentliche Fernlichtregion der Lichtverteilung 58. Eine Beleuchtungseinrichtung von Automotive Lighting zur Erzeugung eines Markierungslichts ist bspw. aus der DE 20 2010 006 097 U1 bekannt.

Der helle Streifen 60 des Markierungslichts 58 wird aus einem einzelnen Modul erzeugt, bspw. aus dem Spot-Modul 50 des Scheinwerfers aus Figur 6, oder durch ein kleines separates Reflexionsmodul im Frontbereich des Kraftfahrzeugs, bspw. im Stossfänger.

### - LED-Modul mit matrixartig angeordneten LED-Lichtquellen (Matrix-Beam)

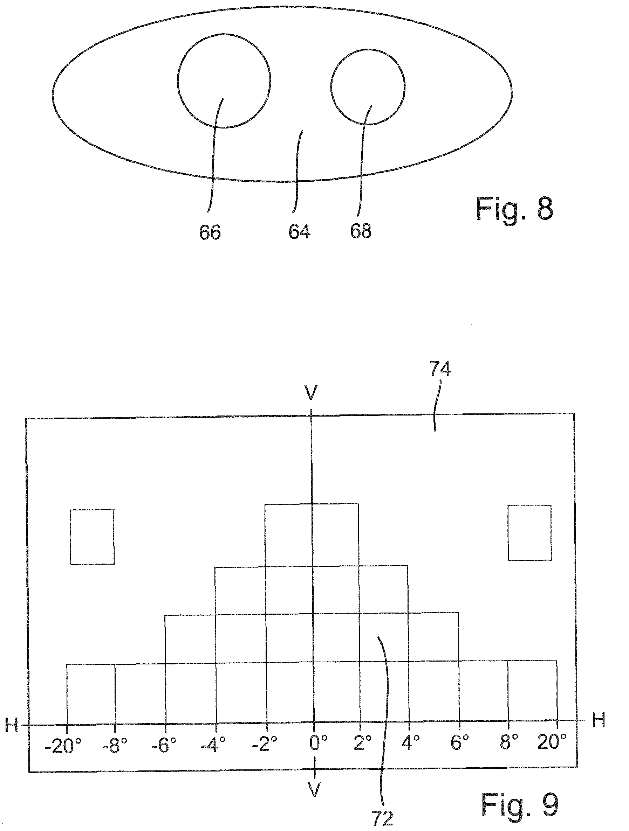

Dabei wird ein Fernlicht mit einer relativ begrenzten Verteilung (ca. +/- 15°) in einzelne rechteckige Pixel unterteilt. Diese werden durch einzelne LEDs erzeugt, die wie in einer Matrix einzeln angesteuert werden können. Damit kann bspw. ein Fernlichtspot mit diskret veränderbarer vertikaler Hell-/ Dunkelgrenze erzeugt werden. Ein entsprechender Scheinwerfer ist beispielhaft schematisch in Figur 8 gezeigt und in seiner Gesamtheit mit dem Bezugszeichen 64 bezeichnet. Das LED-Matrix-Modul 66 erzeugt eine Spotverteilung eines Fernlichts und ein anderes Modul 68, bspw. entsprechend dem Grundlicht-Modul 50 des Scheinwerfers 46 aus Figur 6, erzeugt eine Grundverteilung des Fernlichts. Eine Lichtverteilung 72 des LED-Matrix-Moduls 66, wie sie sich auf einem Messschirm 74 ergibt, ist beispielhaft in Figur 9 gezeigt. Scheinwerfer zur Erzeugung einer entsprechenden Lichtverteilung 72 sind bspw. aus der DE 10 2009 053 581 B3 sowie aus der DE 10 2008 013 603 A1 bekannt.

Zusammenfassend kann gesagt werden, dass es bei allen derzeit aktuellen Lösungen charakteristisch ist, eine Kernlichtverteilung (oder Spotverteilung) mit hohen Ansprüchen, das heißt hoher Genauigkeit, und eine "Halo"-Lichtverteilung (oder Grundverteilung) mit geringen Ansprüchen zu erzeugen. In der Regel werden dazu zwei Module pro Anbauseite bzw. pro Scheinwerfer verwendet. Sowohl bei dem bekannten Konzept LED-Bifunktions-Moduls als auch bei dem bekannten Konzept eines LED-Moduls mit matrixartig angeordneten LED-Lichtquellen ist ein zusätzliches Fernlicht-Modul erforderlich, das außerhalb der Kernlichtverteilung eine "Halo"-Fernlichtverteilung erzeugt, um die Peripherie, d.h. Zonen außerhalb der Kernlichtverteilung, mit geringerer Intensität aufzufüllen. Änderungen der resultierenden Fernlicht-Lichtverteilung sind dabei lediglich aus Fahrersicht zu erkennen. Für einen entgegenkommenden Verkehrsteilnehmer sind die Änderungen der Lichtverteilung in ihrer Gesamtheit aber in der Regel nicht zu erkennen.

Aus der EP 2 085 264 A2 ist ein Scheinwerfer bekannt, bei dem das Fernlicht aus einer Überlagerung eines Abblendlichts und einer Fernlicht-Lichtverteilung, die lediglich einen Fernbereich vor dem Kraftfahrzeug oberhalb einer Hell-/ Dunkelgrenze ausleuchtet, erzeugt wird. Die Fernlicht-Lichtverteilung besteht ihrerseits allerdings nicht aus einer Überlagerung einer Spotverteilung und einer Grundverteilung. Zwar ist die Fernlicht-Lichtverteilung in mehrere Blocksegmente unterteilt, diese sind an ihren Rändern jedoch scharf abgegrenzt und überlappen sich nicht.

Aus der DE 10 2008 044 968 A1 sowie aus der DE 10 2009 020 619 A1 ist ein Fahrzeugscheinwerfer bekannt, der eine LED-Matrix mit mehreren matrixartig in Zeilen und Reihen neben- und übereinander angeordneten LEDs als Lichtquelle aufweist. Durch die LED-Matrix kann eine Lichtverteilung erzeugt werden, die entsprechend der Anordnung der LEDs in der LED-Matrix in eine Vielzahl matrixartig angeordneter Blocksegmente unterteilt ist. Es ist nicht ausdrücklich erwähnt, dass die Lichtverteilung eine Fernlicht-Lichtverteilung ist. Aber, wenn die Lichtverteilung als eine solche betrachtet würde, ergäbe sich diese jedenfalls nicht aus einer Überlagerung einer Spot- und einer Grundverteilung.

Ausgehend von dem beschriebenen Stand der Technik liegt der vorliegenden Erfindung die Aufgabe zugrunde, bei einem Scheinwerfer, dessen Fernlicht-Lichtverteilung durch eine Überlagerung einer Spotverteilung und einer Grundverteilung erzeugt wird, die Freiheitsgrade bei der Erzeugung und Variation der Lichtverteilung zu erhöhen und dadurch eine noch bessere, situationsgerechte Ausleuchtung der Fahrbahn vor dem Fahrzeug zu ermöglichen. Zudem wird angestrebt, die besondere Fernlichtfunktion auch nach außen hin für andere Verkehrsteilnehmer erkennbar zu gestalten. Weiterhin besteht die Aufgabe der Erfindung darin, einen Scheinwerfer anzugeben, bei dem die Beleuchtungsstärke in horizontaler Richtung von der Mitte nach außen hin gezielt kontrastschwach ausläuft und bei dem eine Blendung anderer Verkehrsteilnehmer bei nur minimaler Beeinträchtigung der Ausleuchtung minimierbar ist.

Diese Aufgabe wird mit der Summe der Merkmale des Anspruchs 1 gelöst. Zur Lösung dieser Aufgabe wird vorgeschlagen, zur Erzeugung der Fernlicht-Lichtverteilung nach wie vor ein beliebiges zentrales Modul zur Erzeugung einer Spotverteilung im Kernbereich der Fernlicht-Lichtverteilung zu verwenden. Besonderes Augenmerk wird erfindungsgemäß aber dem Lichtmodul zur Erzeugung der Grundverteilung der Fernlicht-Lichtverteilung (des sog. Halo-Fernlichts) gewidmet. Insbesondere besteht die Grundverteilung nicht mehr nur aus einem einzigen, allgemeinen Halo-Fernlicht. Vielmehr wird diese unspezifische Lichtverteilung auf mehrere Zonen oder Blocksegmente aufgeteilt, die sich zu der Grundverteilung ergänzen. Jedes Blocksegment wird dabei von einem eigenen Unter-Modul des Lichtmoduls erzeugt.

Als Fernlicht-Lichtverteilung wird insbesondere eine Lichtverteilung verstanden, welche einen Bereich vor dem Fahrzeug oberhalb einer horizontalen Hell-/ Dunkelgrenze einer abgeblendeten Lichtverteilung ausleuchtet. Bei gleichzeitiger Aktivierung der Fernlicht-Lichtverteilung zusammen mit der abgeblendeten Lichtverteilung ergibt sich ein den gesetzlichen Anforderungen entsprechendes Fernlicht. Das Zusammensetzen des Fernlichts aus einer abgeblendeten Lichtverteilung und einer Fernlicht-Lichtverteilung kann zur Erzielung einer möglichst hohen Variabilität der Lichtverteilung vorteilhaft sein. Ferner können auf diese Weise die hohen Werte für den Lichtstrom des Fernlichts besonders einfach und kostengünstig realisiert werden.

Als Fernlicht-Lichtverteilung im Sinne der vorliegenden Erfindung wird aber auch ein Fernlicht verstanden, das ohne ein zusätzliches Lichtbündel unterhalb der Hell-/ Dunkelgrenze, bspw. eine abgeblendete Lichtverteilung, die gesetzlichen Anforderungen an das Fernlicht erfüllt. Dies gilt insbesondere für den ECE-Verkehrsraum, weniger für den SAE-Verkehrsraum, wo Messpunkte unterhalb der Horizontalen (HH-Linie) vorgegeben sind und erfüllt werden müssen. Auch eine solche Fernlicht-Lichtverteilung ist jedoch aus einer Überlagerung einer Spotverteilung und einer Grundverteilung zusammengesetzt. Dabei würde sich die Grundverteilung auch unterhalb der Horizontalen bzw. unterhalb der Hell-/ Dunkelgrenze einer abgeblendeten Lichtverteilung erstrecken.

Jedes Unter-Modul umfasst vorzugsweise mindestens eine, vorzugsweise mehrere, separat ansteuerbare, d.h. ein- und ausschaltbar und/oder dimmbare, Lichtquelle, bspw. in Form einer Halbleiter-Lichtquelle, insbesondere in Form einer Leuchtdiode (LED). Zudem umfasst jedes Unter-Modul mindestens eine Primäroptik zum Bündeln des von den Lichtquellen ausgesandten Lichts, bspw. in Form eines Reflektors oder einer Vorsatzoptik aus transparentem Material. Das von der mindestens einen der Vorsatzoptik zugeordneten Lichtquelle ausgesandte Licht wird über Lichteintrittsflächen in die Vorsatzoptik eingekoppelt. Zumindest ein Teil des eingekoppelten Lichts wird an seitlichen Grenzflächen der Vorsatzoptik reflektiert oder totalreflektiert. Das in die Vorsatzoptik eingekoppelte Licht wird, gegebenenfalls nach einer Totalreflexion an einer der Grenzflächen, über Lichtaustrittsflächen der Vorsatzoptik aus dieser ausgekoppelt. Die Bündelung des Lichts der Lichtquellen erfolgt also über Brechung an den Lichteintritts- und/oder den Lichtaustrittsflächen und gegebenenfalls durch Reflexion oder Totalreflexion an den Reflektor- bzw. Grenzflächen der Primäroptik. Das von den Primäroptiken gebündelte Licht kann unmittelbar zur Erzeugung der Grundverteilung genutzt werden. Alternativ ist es denkbar, dass das von den Primäroptiken gebündelte Licht über eine Sekundäroptik des Lichtmoduls, bspw. in Form eines Reflektors oder einer Projektionslinse, in Fahrtrichtung des Kraftfahrzeugs nach vorne projiziert werden. Dabei ist es denkbar, dass eine gemeinsame Sekundäroptik für das von mehreren Primäroptiken gebündelte Licht oder für das von jeder der Primäroptiken gebündelte Licht eine separate Sekundäroptik verwendet wird. Insbesondere ist es denkbar, dass eine einzige gemeinsame Sekundäroptik für das von allen Primäroptiken des Lichtmoduls gebündelte Licht verwendet wird.

Das Modul zur Erzeugung des Halo-Fernlichts wird also in mehrere Elemente oder Unter-Module unterteilt. Alle Unter-Module zusammen erzeugen das Halo-Fernlicht. Die Aufteilung in unterschiedliche Unter-Module bietet einen zusätzlichen Freiheitsgrad sowohl für die Scheinwerfergestaltung wie auch für die sichtbare Kommunikation der Erzeugung und der Art und Ausgestaltung des Lichts nach außen, also für das von anderen Verkehrsteilnehmer wahrgenommene Nachtdesign des erfindungsgemäßen Scheinwerfers. Die Unter-Module sind vorzugsweise in einer Zeile nebeneinander angeordnet. Die Zeile kann dabei die Form einer Geraden oder eine gebogene oder geschwungene Form aufweisen.

Die vorliegende Erfindung bietet die Möglichkeit durch eine mechanikfreie Anordnung von rechteck- oder quadratförmigen, von ovalen oder von parallelogrammförmigen Lichtverteilungen mit jeweils eigener vertikalen Hell-/ Dunkelgrenze Teilbereiche bzw. einzelne Zonen der Grundverteilung gezielt auszublenden. In technischer Hinsicht entspricht die Erfindung also einer schaltbaren Aneinanderreihung von mehreren horizontal zueinander versetzten Blocksegmenten, die jeweils ca. 3° bis 10° breite ausgeleuchtete, d.h. helle Zonen bilden, die sich zu der Grundverteilung einer Fernlicht-Verteilung ergänzen. Ferner kann das erfindungsgemäße Lichtmodul mit einem besonders geringen Aufwand die gewünschte Grundverteilung einer Fernlicht-Lichtverteilung erzielen und bietet gleichzeitig einen hohen Grad an Flexibilität hinsichtlich der Ausgestaltung der Grundverteilung. Insbesondere kann dynamisch auf entgegen kommende und vorausfahrende Verkehrsteilnehmer reagiert werden, d.h. durch Dimmen und/oder Deaktivieren einzelner Blocksegmente können Teilbereiche der Grundverteilung ausgeblendet werden, wenn in diesen andere Verkehrsteilnehmer detektiert wurden.

Während die Deaktivierung von Lichtquellen von zur Vermeidung einer Blendung anderer Verkehrsteilnehmer zu deaktivierenden Unter-Module abrupt und schlagartig erfolgen kann, erfolgt dagegen eine Aktivierung der Lichtquellen von zuvor deaktivierten Unter-Modulen besonders vorteilhaft nicht abrupt und schlagartig, sondern langsam und kontinuierlich, einem rampenförmigen Verlauf folgend. Insbesondere haben die Lichtquellen vom Beginn ihrer Aktivierung an gerechnet frühestens nach 0,5 Sekunden, vorzugsweise erst nach 1 Sekunde, etwa 95% des Maximalwerts ihrer spezifischen Lichtausstrahlung erreicht.

Zur Detektion anderer Verkehrsteilnehmer verfügt das Kraftfahrzeug vorzugsweise über mindestens ein optisches Bilderfassungssystem und eine geeignete Bildverarbeitungssoftware um die erfassten Bilder im Hinblick auf eine Detektion anderer Verkehrsteilnehmer auszuwerten. Das Bilderfassungssystem kann als eine Kamera ausgebildet sein und ist vorzugsweise in einem Frontbereich des Kraftfahrzeugs, bspw. hinter der Windschutzscheibe, insbesondere im Bereich des Innenrückspiegels, angeordnet.

Die Spotverteilung kann durch ein beliebiges anderes Lichtmodul erzeugt werden. Dieses kann als ein Reflexions- oder als ein Projektionsmodul ausgebildet sein. Das Spotlicht-Modul kann beliebige Lichtquellen verwenden, insbesondere Halogenlampen, Gasentladungslampen oder Leuchtdioden (LEDs). Im allgemeinen wird man versuchen, für das Spotlicht-Modul die gleichen Arten von Lichtquellen zu verwenden, wie auch für das Grundlicht-Modul verwendet wurden, um eine möglichst farbeinheitliche Ausleuchtung des Fernbereichs zu erzielen. Bei der Wahl der Lichtquellen der Module zur Erzeugung der Fernlicht-Lichtverteilung wird man wiederum versuchen, sich an den Lichtquellen des Abblendlicht-Moduls zu orientieren, um eine möglichst einheitliche Ausleuchtung des gesamten Fernlicht-Bereichs vor dem Fahrzeug (umfassend die abgeblendete Lichtverteilung und die Fernlicht-Lichtverteilung) zu erzielen. Zur dynamischen Reaktion auf andere Verkehrsteilnehmer kann die Spotverteilung in verschiedene Zonen unterteilt sein, die einzeln oder gruppenweise ein- oder ausgeschaltet und/oder gedimmt werden können. Die Zonen können rechteckig bzw. im Wesentlichen quadratisch ausgebildet und in mehreren Zeilen und Spalten matrixartig angeordnet sein. Alternativ können die Zonen auch in Form von vertikalen Streifen ausgebildet und in einer einzigen Zeile nebeneinander angeordnet sein (vgl. bspw. DE 10 2011 017 630.6).

Erfindungsgemäß wird die zur Erzeugung des Halo-Fernlichts genutzte Fernlicht-Lichtverteilung in unterschiedliche Zonen aufgeteilt, die nicht die gleichen Anforderungen wie ein Streifen- oder Matrix- (Spot-) Fernlicht aufweisen müssen. Die Blocksegmente müssen bspw. keine ausgesprochen scharfen vertikalen Hell-/ Dunkelgrenzen aufweisen, sondern können an den Rändern relativ unscharf und diffus auslaufen. Insbesondere liegen die Anforderungen an die Schärfe der Hell-/ Dunkelgrenze unterhalb den derzeitigen Anforderungen bei dem sog. Matrix-Beam, nämlich ausgehend von einem ausgeleuchteten Bereich innerhalb von 0,5° einen Abfall auf ein blendfreies Niveau zu erreichen, d.h. einen Abfall von etwa 95% der maximalen Intensität auf einen Wert <5% der maximalen Intensität. Ferner können die Blocksegmente höher sein als beim dem sog. Matrix-Beam, und sie benötigen auch kein besonders ausgeprägtes und starkes Maximum.

Insbesondere haben die ausgeleuchteten Blocksegmente, die zusammen die Grundverteilung der Fernlicht-Lichtverteilung bilden, eine vertikale Erstreckung von größer als 3° bis 4° oberhalb der Horizontalen, bevorzugt von etwa 5° bis 15° oberhalb der Horizontalen. Die Blocksegmente erstrecken sich bei Geradeausfahrt des Fahrzeugs in horizontaler Richtung symmetrisch zu einer Vertikalen. Die Höhe der Blocksegmente nimmt mit zunehmendem Abstand von der Vertikalen ab, so dass die Blocksegmente am Randbereich der Grundverteilung eine geringere Höhe aufweisen als die Blocksegmente im Zentrum der Grundverteilung, d.h. im Bereich der Vertikalen. In horizontaler Richtung erstreckt sich die Grundverteilung auf einem virtuellen, vor dem Fahrzeug angeordneten Messschirm über einen Bereich von maximal etwa -30° bis +30° und minimal von etwa -10° bis +10°. Die Blocksegmente ergänzen sich also in horizontaler Richtung zu der genannten horizontalen Erstreckung der Grundverteilung. Die einzelnen Blocksegmente weisen eine horizontale Erstreckung von 3° bis 10° auf, wobei die horizontale Erstreckung der einzelnen Blocksegmente der Grundverteilung auch unterschiedlich sein kann. Somit weist das Lichtmodul zwischen 5 und 10 Unter-Module zur Erzeugung ebenso vieler Blocksegmente auf. Besonders bevorzugt ist es, wenn das Lichtmodul drei bis zehn Unter-Module aufweist und die Grundverteilung in drei bis zehn Blocksegmente unterteilt ist.

Bevorzugt liegt ein Intensitätsmaximum der ausgeleuchteten Blocksegmente jeweils auf dem Horizont (HH-Linie) bzw. knapp oberhalb des Horizonts auf der zur Vertikalen (VV-Linie) gerichteten Seite der Blocksegmente. Die Blocksegmente weisen jeweils in einem zu einem Schnittpunkt der Horizontalen und der Vertikalen hin gerichteten Bereich eine maximale Intensität auf. Dabei nimmt die Beleuchtungsstärke vorzugsweise in horizontaler und in vertikaler Richtung mit zunehmendem Abstand von dem Bereich des Intensitätsmaximums ab. Die Blocksegmente weisen jeweils in dem Bereich des Intensitätsmaximums eine maximale Beleuchtungsstärke auf, die in einem Bereich zwischen 5 Lux (lx) und 40 lx, insbesondere zwischen 10 lx und 30 lx, ganz besonders bevorzugt zwischen 10 lx und 20 lx, liegt. In einem Bereich etwa 3° bis 4° horizontal ist in einer Fernlicht-Lichtverteilung die Intensität entlang einer Horizontalen (HH-Linie) auf etwa 1/3 der maximalen Beleuchtungsstärke im Bereich des Intensitätsmaximums (ca. in einem Schnittpunkt HV der Horizontalen HH und einer Vertikalen W) abgefallen. Die in diesem Bereich der Fernlicht-Lichtverteilung angeordneten Blocksegmente weisen eine entsprechende Beleuchtungsstärke auf. Insbesondere liegt die Beleuchtungsstärke in diesem Bereich zwischen 1,5 lx und 15 lx, insbesondere zwischen 3 lx und 10 lx, ganz besonders bevorzugt zwischen 3 lx und 7 lx. Die Beleuchtungsstärke kann in den im Zentrum der Grundverteilung angeordneten Blocksegmenten größer sein als in den am Rand der Lichtverteilung angeordneten Blocksegmenten.

Ein Gradient der Beleuchtungsstärke am Rand der einzelnen Blocksegmente auf einer zu der Vertikalen (VV-Linie) hin gerichteten Seite der Blocksegmente ist erfindungsgemäß größer als auf einer von der Vertikalen abgewandten Seite der Blocksegmente. Vorzugsweise fällt die Beleuchtungsstärke der einzelnen Blocksegmente auf einer zu der Vertikalen hin gerichteten Seite der Blocksegmente innerhalb von etwa 0,5° bis 10° horizontal, insbesondere von 1° bis 5° horizontal, besonders bevorzugt von 1° bis 3° horizontal, von 95% des Intensitätsmaximums des Blocksegments auf weniger als 5% des Intensitätsmaximums. Das bedeutet, dass die Intensität ausgehend von einem Intensitätsmaximum schnellstens innerhalb von 1° horizontal (bei einem besonders steilen Gradienten) ein blendfreies Niveau erreicht hat. Bei einem flacheren Gradienten wird das blendfreie Niveau erst nach etwa 5° horizontal erreicht. Selbstverständlich kann der Gradient auch beliebig andere Werte zwischen 1° und 5° annehmen.

Die Bereiche der Intensitätsmaxima der Blocksegmente sind in der Grundverteilung vorteilhafterweise zueinander beabstandet. In der Grundverteilung nebeneinander angeordnete Blocksegmente überlagern sich an ihren Rändern. Die Überlappung zwischen benachbarten Segmenten kann zwischen 1° und 5° liegen.

Der erfindungsgemäße Kraftfahrzeugscheinwerfer mit dem Lichtmodul zur Erzeugung der Grundverteilung aus mehreren Blocksegmenten kann im Rahmen der gesetzlichen Vorgaben an einer beliebigen Stelle im Frontbereich des Kraftfahrzeugs angeordnet sein.

Das Lichtmodul ist als Teil eines Scheinwerfers ausgebildet und in einem Gehäuse des Scheinwerfers angeordnet. Der Scheinwerfer weist zusätzlich zu dem Grundlicht-Modul auch ein beliebig ausgebildetes Spotlicht-Modul zur Erzeugung der die Grundverteilung überlagernden Spotverteilung auf, so dass die Fernlicht-Lichtverteilung allein durch den Scheinwerfer erzeugt werden kann. Falls zur Erfüllung der gesetzlichen Anforderungen an das Fernlicht eine Überlagerung der Fernlicht-Lichtverteilung mit einer weiteren Lichtverteilung, bspw. einer abgeblendeten Lichtverteilung mit einer horizontalen Hell-/ Dunkelgrenze (insbesondere eine Abblendlicht-Lichtverteilung), kann der Scheinwerfer auch noch ein entsprechendes weiteres beliebig ausgestaltetes Lichtmodul zur Erzeugung der weiteren Lichtverteilung, bspw. ein Abblendlichtmodul zur Erzeugung der abgeblendeten Lichtverteilung, aufweisen.

Es wird vorgeschlagen, dass die Ansteuerung des Spotlicht-Moduls auf die Ansteuerung der mindestens einen Lichtquelle der Unter-Module des Scheinwerfers abgestimmt ist, so dass, wenn andere Verkehrsteilnehmer in einer Zone detektiert wurden, zeitgleich mit der Deaktivierung der mindestens einen Lichtquelle des mindestens einen zu deaktivierenden Unter-Moduls des Grundlicht-Moduls zumindest derjenige Teil der Spotverteilung deaktiviert wird, der in der Zone liegen würde, in der der andere Verkehrsteilnehmer detektiert wurde. Gemäß dieser Weiterbildung wird also nicht nur mit der Grundverteilung dynamisch auf andere Verkehrsteilnehmer reagiert, um deren Blendung zu vermeiden, sondern auch mit der Spotverteilung. Entscheidend ist dabei, dass die Ansteuerung der Lichtquellen des Spotlicht-Moduls auf die Ansteuerung der Lichtquellen der Unter-Module des Grundlicht-Moduls abgestimmt ist. Da die Spotverteilung üblicherweise feiner unterteilt ist als die Grundverteilung gemäß der vorliegenden Erfindung, kann es erforderlich sein, mehrere Teilbereiche der Spotverteilung zu deaktivieren, wohingegen gleichzeitig die Deaktivierung eines einzigen Blocksegments der Grundverteilung ausreichen kann, um eine Blendung des anderen Verkehrsteilnehmers zu verhindern.

Es ist denkbar, was aber nicht ein Teil der Erfindung ist, dass das Spotlicht-Modul nur als ganzes aktiviert bzw. deaktiviert werden kann. Das würde bedeuten, dass zur Vermeidung der Blendung eines detektierten anderen Verkehrsteilnehmers das gesamte Spotlicht-Modul ausgeschaltet werden muss. Dank der Unterteilung des Grundlicht-Moduls in mehrere Blocksegmente, von denen selbst bei entgegenkommenden oder vorausfahrenden Verkehrsteilnehmern diejenigen noch aktiviert sein können, die außerhalb der Zone liegen, in der der andere Verkehrsteilnehmer detektiert wurde, wird der Fernbereich vor dem Fahrzeug trotz ausgeschaltetem Spotlicht-Modul durch die aktivierten Blocksegmente der Grundverteilung der Fernlicht-Lichtverteilung immer noch besser ausgeleuchtet als dies bei reiner abgeblendeten Lichtverteilung (insbesondere Abblendlicht-Lichtverteilung) der Fall wäre. Auf diese Weise kann also ein einfach aufgebautes, kostengünstiges dynamisches Teilfernlicht realisiert werden. Ferner wäre es auch denkbar, dass das Spotlicht-Modul eine im Strahlengang angeordnete variable Blendenanordnung aufweist, die es ermöglicht, bei Bedarf nach Art des eingangs beschriebenen Teilfernlichts Teile der Spotverteilung der Fernlicht-Lichtverteilung auszublenden.

Da ein vierrädriges Kraftfahrzeug üblicherweise zwei Scheinwerfer aufweist, ist es denkbar, die beiden Scheinwerfer bzw. die darin vorgesehenen Grundlicht-Lichtmodule unterschiedlich, insbesondere asymmetrisch auszugestalten, so dass sie unterschiedliche Teile der Grundverteilung der Fernlicht-Lichtverteilung erzeugen. In diesem Zusammenhang wird vorgeschlagen, dass einer der beiden Scheinwerfer ein Lichtmodul umfasst, das die Blocksegmente einer linken Seite der Grundverteilung erzeugt, und der andere Scheinwerfer ein anderes Lichtmodul umfasst, das die Blocksegmente einer rechten Seite der Grundverteilung erzeugt, so dass sich die Blocksegmente der Lichtmodule der beiden Scheinwerfer zu der gesamten Grundverteilung ergänzen und/oder überlagern. Insbesondere wäre es denkbar, dass sich die Blocksegmente der rechten und der linken Anbauseite in der Mitte der Grundverteilung überlagern. Dabei kann der Grad der Überlagerung durch horizontales Verschwenken der Lichtmodule bzw. Scheinwerfer der rechten und/oder linken Anbauseite während des Betriebs der Scheinwerferanlage dynamisch variiert werden.

Mit der vorliegenden Erfindung ist erstmals möglich, nach außen hin sichtbar zu machen, dass ein Fahrzeug ein Teilfernlicht je nach Fahr- und Verkehrssituation erzeugen kann bzw. erzeugt. Andere (bezüglich des mit dem erfindungsgemäßen Lichtmodul versehenen Fahrzeugs voraus-, vorbei- oder parallelfahrende oder stehende und quer zum Fahrzeug fahrende oder stehende sowie entgegenkommende)Verkehrsteilnehmer können deutlich erkennen, wie einzelne Unter-Module des Grundlicht-Moduls fahrsituationsabhängig dynamisch zu- bzw. abgeschaltet werden. Dadurch kann der technische Fortschritt auf dem Gebiet des Teilfernlichts nach außen hin kommuniziert werden.

Die Aufteilung einer Grundverteilung (eines sog. Halo-Fernlichts) in verschiedene kleinere Blocksegmente erlaubt eine unterschiedliche Dimensionierung der Lichtfläche und der dazu verwendeten Lichtquellen und optischen Elemente (z.B. Primäroptiken, Vorsatzoptiken, Bündelungsoptiken, Reflektoren etc.). Es können sowohl Reflexionssysteme, herkömmliche Projektionssysteme als auch direkt abbildende Projektionssysteme als Unter-Module verwendet werden. Je nach Wahl von Abstand eines optischen Elements zur Lichtquelle (z.B. LED-Chip) und Brennweite des optischen Elements kann dabei die Lichtquelle (z.B. ein einzelner LED-Chip) direkt in den Straßenraum abgebildet werden. Im Strahlengang des von dem optischen Element gebündelten Lichts kann eine Sekundäroptik angeordnet sein, welche das Licht vor das Fahrzeug projiziert. Die Sekundäroptik kann als eine Projektionslinse oder als ein Reflektor ausgebildet sein. Die Sekundäroptik kann als ein Element sämtlichen Unter-Modulen zugeordnet sein. Oder aber die Sekundäroptik ist in mehrere Unteroptikelemente unterteilt, die jeweils einem oder einer Gruppe von Unter-Modulen zugeordnet sind.

Jedes der einzelnen Blocksegmente der Grundverteilung bzw. jede der die einzelnen Blocksegmente erzeugenden Lichtquelle ist separat ansteuerbar, was eine dynamische Adaptation auf den jeweiligen Fahrbahnzustand oder die jeweilige Verkehrssituation im Umfeld des Fahrzeugs in der gesamten Lichtverteilung ermöglicht. Der Fahrer des Fahrzeugs fährt in jedem Fahrzustand mit maximalem Fernlicht, nicht nur im Kernbereich der Fernlichtverteilung (im Bereich der Spotverteilung, bspw. der Matrix eines Matrix-Beams bzw. des Streifens eines Markierungslichts), sondern in der gesamten Zone der Lichtverteilung oberhalb des Horizonts. Ausgenommen bzw. abgeschattet ist nur die lokal beschränkte, exakte Zone der Spotverteilung (z.B.

Matrixelement oder Streifen), in der andere Verkehrsteilnehmer detektiert wurden und die zur Vermeidung einer Blendung der anderen Verkehrsteilnehmer von der Fernlicht-Lichtverteilung ausgeblendet wurde, sowie gemäß der Erfindung das bzw. die jeweiligen der Zone zugeordneten Blocksegmente der Grundverteilung.

Das erfindungsgemäße Lichtmodul mit den einzeln elektrisch ansteuerbaren Unter-Modulen zur Erzeugung der Blocksegmente kann bspw. auch zur Realisierung einer Kurvenlichtfunktionalität ohne die entsprechende Mechanik mit beweglichen Teilen verwendet werden. Die Dynamik des Lichtmoduls kommt aus dem Zu- bzw. Abschalten von Lichtquellen zur Erzeugung der Blocksegmente der Grundverteilung.

Weitere Merkmale und Vorteile der Erfindung werden nachfolgend anhand der Figuren näher erläutert, wobei die Erfindung die angegebenen Merkmale nicht nur in der beschriebenen und dargestellten Kombination, sondern auch in einer beliebig anderen Kombination aufweisen kann, solange diese in dem Rahmen der beigelegten Ansprüche liegt. Es zeigen:
- Figur 1: einen aus dem Stand der Technik bekannten Scheinwerfer zur Erzeugung eines Abblendlichts und eines Fernlichts;
- Figur 2: einen Teil einer von einem aus dem Stand der Technik bekannten Lichtmodul bzw. Scheinwerfer erzeugten Teil-Fernlichtlichtverteilung;
- Figur 3: eine aus dem Stand der Technik bekannte Teil-Fernlichtlichtverteilung;
- Figur 4: einen aus dem Stand der Technik bekannten Scheinwerfer mit einem Xenon-Bifunktions-Modul;
- Figur 5: oben eine von einem aus dem Stand der Technik bekannten LED-Spotlicht-Modul erzeugte Spotverteilung einer Fernlicht-Lichtverteilung;
- Figur 5: unten eine von einem beliebigen aus dem Stand der Technik bekannten Lichtmodul erzeugte Grundverteilung einer Fernlicht-Lichtverteilung;
- Figur 6: einen aus dem Stand der Technik bekannten Scheinwerfer mit einem Lichtmodul zur Erzeugung einer Grundverteilung einer Fernlicht-Lichtverteilung und mit einem LED-Spotlicht-Modul zur Erzeugung einer Spotverteilung der Fernlicht-Lichtverteilung;
- Figur 7: eine aus dem Stand der Technik bekannte Lichtverteilung eines Markierungslichts;
- Figur 8: einen aus dem Stand der Technik bekannten Scheinwerfer mit einem Lichtmodul zur Erzeugung einer Grundverteilung einer Fernlicht-Lichtverteilung und mit einem LED-Matrix-Modul zur Erzeugung einer Spotverteilung der Fernlicht-Lichtverteilung;
- Figur 9: eine mittels eines aus dem Stand der Technik bekannten LED-Matrix-Moduls erzeugte Spotverteilung einer Fernlicht-Lichtverteilung;

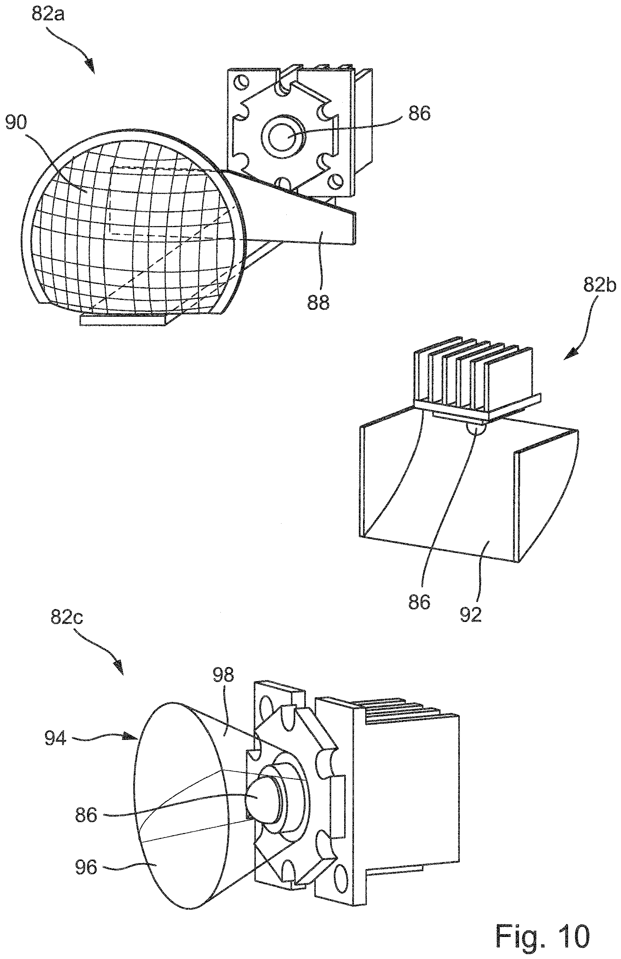

- Figur 10: verschiedene Ausführungsformen eines Unter-Moduls eines erfindungsgemäßen Grundlicht-Moduls;

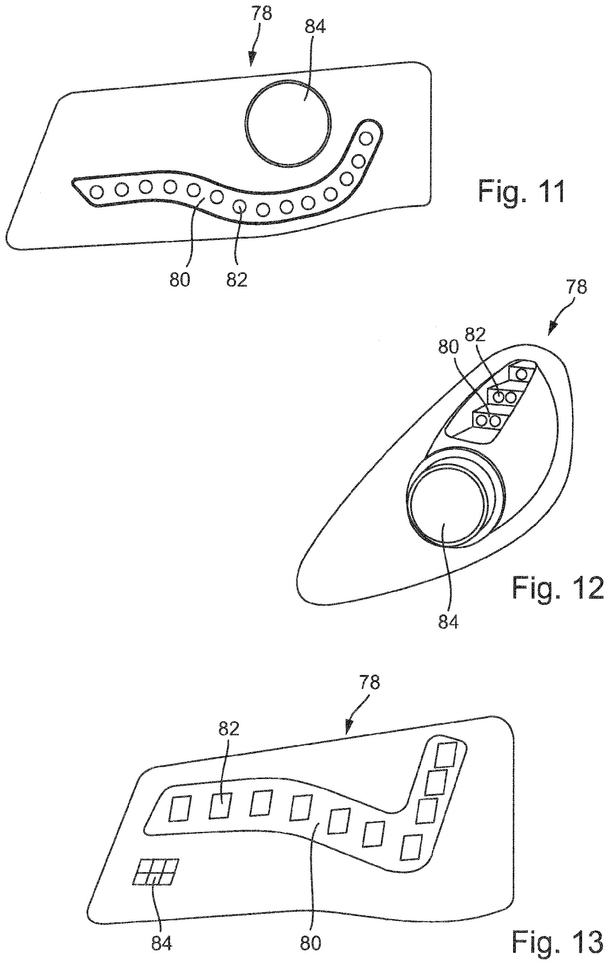

- Figur 11: einen erfindungsgemäßen Scheinwerfer gemäß einer bevorzugten Ausführungsform;
- Figur 12: einen erfindungsgemäßen Scheinwerfer gemäß einer weiteren bevorzugten Ausführungsform;
- Figur 13: einen erfindungsgemäßen Scheinwerfer gemäß noch einer weiteren bevorzugten Ausführungsform;

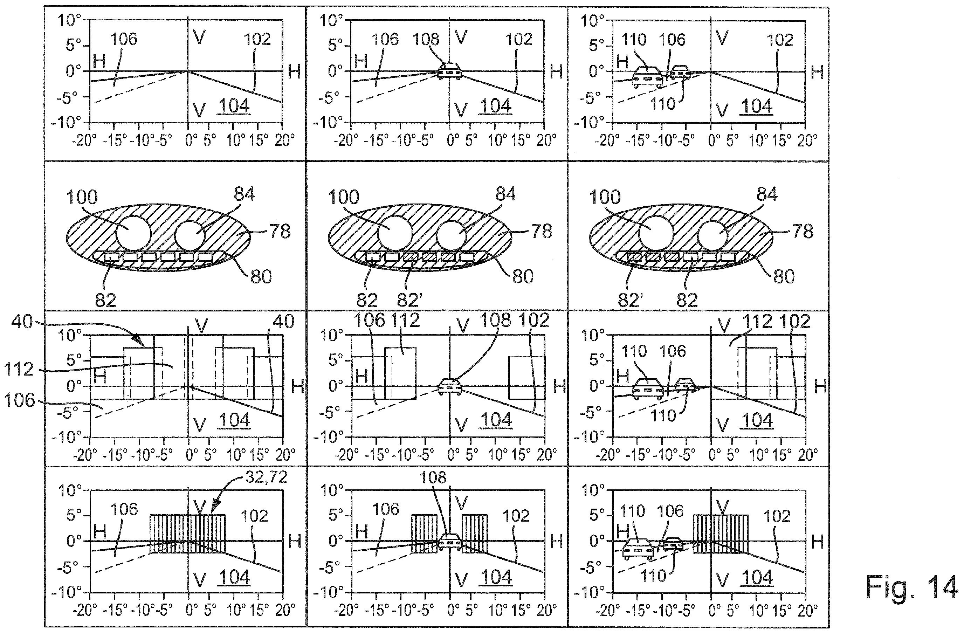

- Figur 14: eine Tabelle mit verschiedenen Verkehrssituationen (1. Zeile), entsprechenden Ansteuerungen der Unter-Module des Lichtmoduls des erfindungsgemäßen Kraftfahrzeugscheinwerfers (2. Zeile), entsprechenden Grundverteilungen einer Fernlicht-Lichtverteilung (3. Zeile) und entsprechenden Spotverteilungen der Fernlicht-Lichtverteilung (4. Zeile);

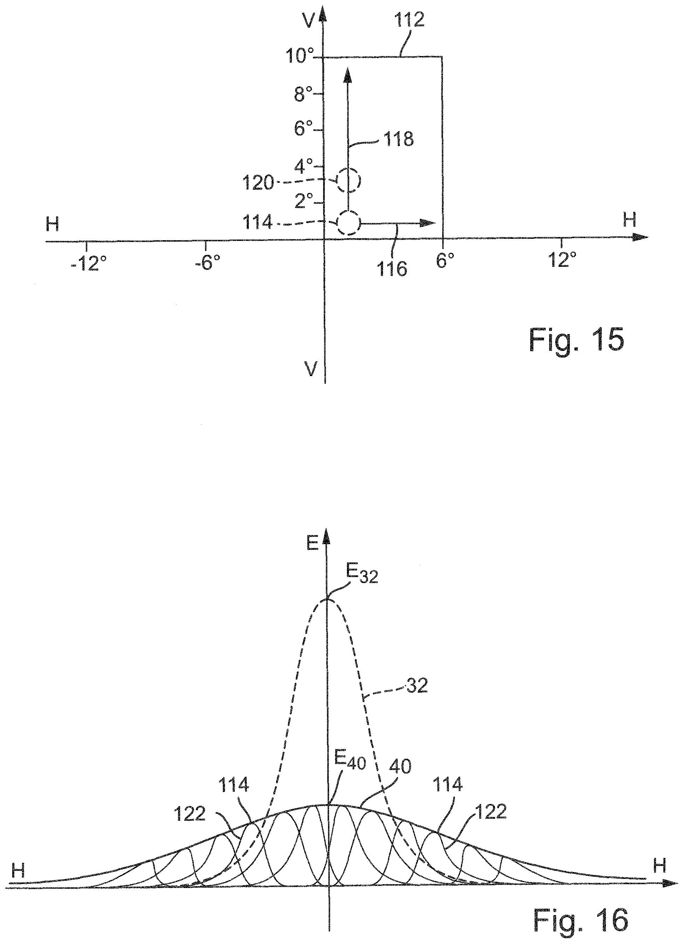

- Figur 15: ein beispielhaft gezeigtes Blocksegment der Grundverteilung zur Veranschaulichung der Intensitätsverteilung innerhalb des Blocksegments; und
- Figur 16: eine Intensitätsverteilung über die gesamte Breite der Grundverteilung einer Fernlicht-Lichtverteilung.

In den Figuren 11 bis 13 sind verschiedene Beispiele für Ausführungsformen eines erfindungsgemäßen Scheinwerfers 78 dargestellt. Der Scheinwerfer 78 umfasst ein Gehäuse aus Kunststoff, in dem ein Lichtmodul 80 zur Erzeugung einer Grundverteilung eines Fernlichts angeordnet ist. Das Grundlicht-Modul 80 umfasst mehrere Unter-Module 82, die in den Ausführungsbeispielen der Figuren 11 und 13 in einer gebogenen bzw. abgewinkelten Zeile nebeneinander angeordnet sind. Bei dem Ausführungsbeispiel aus Figur 12 sind die Unter-Module in mehreren Zeilen und Spalten neben- bzw. übereinander angeordnet. In dem Lichtmodul 80 aus Figur 12 sind drei übereinander und nach hinten versetzt zueinander angeordnete Zeilen mit jeweils zwei Unter-Modulen 82 vorgesehen. Die Unter-Module 82 erzeugen unabhängig von ihrer Anordnungen die Blocksegmente, die sich zu der Grundverteilung des Fernlichts ergänzen, indem sie in gewünschter Weise ausgerichtet und/oder geeignete optische Elemente (z.B. Vorsatzoptiken, Linsen, Reflektoren) verwendet werden. Es wird angemerkt, dass der Kraftfahrzeugscheinwerfer mit dem Lichtmodul 80 an einer beliebigen Stelle im Frontbereich des Kraftfahrzeugs angeordnet sein kann.

Zusätzlich zu dem Grundlicht-Modul 80 ist in den Scheinwerfern 78 ein weiteres Lichtmodul 84 zur Erzeugung einer Spotverteilung vorgesehen, die zur Überlagerung mit der Grundverteilung vorgesehen ist, so dass sich eine Fernlicht-Lichtverteilung ergibt. Bei dem Scheinwerfer 78 aus Figur 11 ist das Spotlicht-Modul 84 als ein Reflexionssystem ausgebildet, wobei der Reflektor nach außen hin sichtbar ist. Bei dem Ausführungsbeispiel aus Figur 12 ist das Spotlicht-Modul 84 als ein Projektionssystems ausgebildet, wobei in Figur 12 die Projektionslinse nach außen hin sichtbar ist. Die Spotlicht-Module 84 aus den Figuren 11 und 12 verwenden vorzugsweise Gasentladungslampen oder LEDs als Lichtquellen (nicht sichtbar). Bei dem Ausführungsbeispiel aus Figur 13 ist das Spotlicht-Modul 84 als ein LED-Modul ausgebildet, wobei ein Optik-Array mit sechs Arrayelementen nach außen hin sichtbar ist. Im dem dargestellten Beispiel umfasst das Optik-Array sechs Elemente, die in zwei Zeilen und drei Spalten matrixartig angeordnet sind. Dahinter, d.h. entgegen der Lichtaustrittsrichtung, verbirgt sich ein LED-Array mit mehreren matrixartig angeordneten LEDs. Jedem Element des Optik-Arrays ist vorzugsweise mindestens eine der LEDs des LED-Arrays zugeordnet.

Die Lichtmodule 80, 84 der Scheinwerfer 78 sind ausgebildet, eine Fernlicht-Lichtverteilung zu erzeugen, die aus einer Überlagerung einer Spotverteilung und einer Grundverteilung besteht. Dabei ist die Grundverteilung in mehrere unscharfe Blocksegmente unterteilt, die sich an ihren Rändern teilweise überlagern können. Die erzeugte Fernlicht-Lichtverteilung kann bereits die bspw. in den ECE- oder den entsprechenden SAE-Regelungen definierten gesetzlichen Vorgaben für Fernlicht erfüllen, ohne dass es einer Überlagerung der Fernlicht-Lichtverteilung mit weiteren Lichtverteilungen, bspw. einer abgeblendeten Lichtverteilung, bedarf. Das bedeutet insbesondere, dass die Fernlicht-Lichtverteilung sowohl einen Bereich oberhalb einer Hell-/ Dunkelgrenze einer abgeblendeten Lichtverteilung als auch einen Bereich unterhalb der Hell-/ Dunkelgrenze der Lichtverteilung ausleuchtet.

Es ist aber auch denkbar, dass die Fernlicht-Lichtverteilung lediglich einen Bereich oberhalb der Hell-/ Dunkelgrenze einer abgeblendeten Lichtverteilung ausleuchtet und erst durch eine Überlagerung mit der abgeblendeten Lichtverteilung, bspw. einer Nebellicht- oder Abblendlichtverteilung, ein Fernlicht entsteht, das den gesetzlichen Anforderungen genügt. In diesem Fall kann in den Gehäusen der Scheinwerfer 78 jeweils ein zusätzliches Lichtmodul zur Erzeugung der abgeblendeten Lichtverteilung angeordnet sein. Solche zusätzlichen Lichtmodule sind allerdings in den Figuren 11 bis 13 nicht dargestellt bzw. nicht näher bezeichnet. Ferner können in den Gehäusen der Scheinwerfer 78 beliebig andere Lichtmodule und/oder Leuchtenmodule (nicht dargestellt) angeordnet sein, um beliebig andere Lichtfunktionen oder Leuchtenfunktionen (z.B. Blinklicht, Positions-, Begrenzungs- oder Standlicht) zu erzeugen.

Es ist denkbar, dass die Unter-Module 82 des Grundlicht-Moduls 80 dann, wenn kein Fernlicht erzeugt wird, bspw. in geschlossenen Ortschaften oder bei ausreichender Sicht, zur Erzeugung eines Tagfahrlichts genutzt werden.

Verschiedene bevorzugte Ausführungsformen der Unter-Module 82 sind bspw. in Figur 10 gezeigt. Dabei ist in Figur 10 oben ein Projektionssystem 82a dargestellt, bei dem das von den LEDs 86 erzeugte Licht, wahlweise nach einer Bündelung, bspw. mittels einer Vorsatzoptik, zumindest teilweise an einer senkrecht stehenden Blendenanordnung 88 vorbeigelangt. Selbstverständlich könnte sich die Blendenanordnung 88 auch in einer horizontalen Ebene erstrecken oder als eine Blendenwalze ausgebildet sein. Das an der Blendenanordnung 88 vorbei gelangte Licht wird zur Erzeugung der gewünschten Lichtverteilung des Blocksegments durch eine Sekundäroptik 90 vor das Fahrzeug projiziert. Die Sekundäroptik 90 ist in dem dargestellten Ausführungsbeispiel als eine Projektionslinse ausgebildet, könnte jedoch auch ein Reflektor sein. Darunter ist in Figur 10 ein Reflexionssystem 82b dargestellt, bei dem das von der oder den LEDs 86 ausgesandte Licht, wahlweise nach einer Bündelung, bspw. mittels einer Vorsatzoptik, durch einen Reflektor 92 zur Erzeugung einer gewünschten Lichtverteilung vor das Fahrzeug reflektiert wird.

Nochmals darunter ist in Figur 10 ein Beispiel für ein Unter-Modul 82c mit Vorsatzoptik 94 zur Bündelung des von der oder den LEDs 86 erzeugten Lichts gezeigt. Die Vorsatzoptik 94 besteht vorzugsweise aus einem organischen oder anorganischen Glas, vorzugsweise PMMA (Polymethylmethacrylat), PC (Polycarbonat) oder Silikon. Die Vorsatzoptik 94 teilt das von der LED 86 ausgesandte Licht in zwei Strahlbündel auf. Ein erstes Strahlbündel gelangt über der LED 86 zugewandte Lichteintrittsflächen der Vorsatzoptik 94 in die Vorsatzoptik 94 und wird über von der LED 86 abgewandte Lichtaustrittsflächen 96 aus dieser wieder ausgekoppelt. Das Strahlbündel kann durch Brechung an den Lichteintritts- und/oder Lichtaustrittsflächen 96 gebündelt werden. Die Flächen 96 können gewölbt ausgebildet sein, so dass sie eine bündelnde Wirkung auf hindurchtretende Lichtstrahlen haben. Ein zweites Strahlenbündel tritt über der LED 86 zugewandte Lichteintrittsflächen in die Vorsatzoptik 94 ein, wird an äußeren Grenzflächen 98 der Vorsatzoptik 94 mindestens einmal totalreflektiert und dann durch die Lichtaustrittsflächen 96 wieder aus der Vorsatzoptik 94 ausgekoppelt. Das zweite Strahlbündel kann durch Brechung an der Lichteintrittsfläche und/oder der Lichtaustrittsfläche 96 sowie durch die Totalreflexion an den Grenzflächen 98 gebündelt werden.

Es ist denkbar, die Lichtauskoppelflächen von Lichtleitern als Lichtquellen für die Unter-Module zu verwenden. Dabei wird an einer bestimmten Stelle von einer beliebigen Lichtquelle Licht in den Lichtleiter eingekoppelt, in diesem mittels Totalreflexion weitergeleitet und schließlich so ausgekoppelt, dass es zur Erzeugung eines Blocksegments genutzt werden kann.

Durch die geringen technischen Anforderungen an ein Lichtmodul zur Erzeugung der Blocksegmente der Grundverteilung eines Fernlichts sind sehr viele unterschiedliche Technologien und Kombinationen möglich. Die Grundlicht-Module sind vorzugsweise als eine Zeile (eines neben dem anderen in etwa auf gleicher Höhe, wie in der Tabelle der Figur 14 gezeigt) angeordnet. Sie können aber auch als eine gebogene oder geknickte Zeile (eines neben dem anderen wie in den Figuren 11 und 13 gezeigt), als kompaktes Array (in mehreren Zeilen und Spalten neben- bzw. übereinander wie in Figur 12 gezeigt) oder als beliebig im Scheinwerfer oder im Stossfänger verteilte Anordnung arrangiert werden.

Denkbar ist vor allem eine kunden- und fahrzeugspezifische Anordnung mit Wellen (vgl. Figuren 11 und 13), wie dies bei manchen Fahrzeugen bereits für Tagfahrlicht bekannt ist. So könnten in Zukunft nicht nur statische, in der Ausleuchtung nicht variierte Lichtverteilungen für Tagfahrlicht (DRL) einerseits und Positionslicht (POS) andererseits entstehen, sondern auch variabel leuchtende Blocksegmente, welche die technische Funktion zumindest eines Teils des Teilfernlichts übernehmen und die Dynamik nach außen sichtbar machen. Dadurch können bisher für den Betrachter und andere Verkehrsteilnehmer verborgene Funktionalitäten in Form von dynamischen Lichtfunktionen nach außen hin sichtbar gemacht werden.

Die Tabelle in Figur 14 zeigt beispielhaft eine Darstellung der prinzipiellen Möglichkeiten einer Verschaltung bzw. Ansteuerung der Unter-Module und einer Kommunikation der Funktionalität nach außen mit Streifen/ Matrix-Beam (Spotlicht) und Blocksegmenten (Grundlicht) im Fernlichtfall mit unterschiedlichen Verkehrssituationen. In der oberen Zeile der Tabelle sind verschiedene Verkehrssituation dargestellt. Dabei ist die Fahrbahn vor dem Fahrzeug mit dem Bezugszeichen 102, die Fahrspur auf der eigenen Verkehrsseite mit dem Bezugszeichen 104 und die Fahrspur auf der Gegenverkehrsseite mit dem Bezugszeichen 106 bezeichnet. In der linken Spalte der Tabelle ist die Fahrbahn 102 vor dem Fahrzeug frei, in der mittleren Spalte ist ein vorausfahrendes Fahrzeug 108 auf der eigenen Fahrbahn 104 vorhanden, und in der rechten Spalte sind auf der Gegenfahrbahn 106 zwei entgegenkommende Fahrzeuge 110 vorhanden.

In der zweiten Zeile ist anhand eines möglichen Ausführungsbeispiels eines erfindungsgemäßen Scheinwerfers 78 die für die Verkehrssituation geeignete Ansteuerung der LEDs der Unter-Module 82 des Grundlicht-Moduls 80 gezeigt, wobei helle Kästchen 82 aktivierte LEDs sind und dunkle Kästchen 82' deaktivierte LEDs repräsentieren. Die Fernlicht-Lichtverteilung wird durch eine Überlagerung der Spotverteilung 32, 72 (vgl. Zeile 4 der Tabelle aus Figur 14), die von dem Fernlicht-Spotmodul 84 erzeugt wird, und der von den in einer Zeile unten im Scheinwerfer 78 angeordneten aktivierten LEDs 82 des Grundlicht-Moduls 80 erzeugten Blocksegmente 112 (vgl. Ziele 3 der Tabelle aus Figur 14) erzeugt. In der linken Spalte von Zeile 2 sind alle sechs LEDs 82 aktiviert, so dass die Grundverteilung durch sechs nebeneinander angeordnete Blocksegmente 112 gebildet wird (vgl. Zeile 3). Deutlich zu erkennen ist, dass sich benachbarte Blocksegmente 112 bereichsweise überlappen und dass die Segmente unterschiedliche Höhen (vertikale Erstreckung) aufweisen. In der mittleren Spalte von Zeile 2 sind nur zwei LEDs 82 zur Erzeugung der auf der Gegenfahrbahn 106 befindlichen Blocksegmente 112 und eine LED 82 zur Erzeugung eines am Fahrbahnrand der eigenen Fahrbahn 104 befindlichen Blocksegments 112 aktiviert, so dass der mittlere Bereich, in dem sich der vorausfahrende Verkehrsteilnehmer 108 befindet, von der Grundverteilung ausgenommen ist. In der rechten Spalte von Zeile 2 sind lediglich drei LEDs 82 zur Erzeugung der auf der eigenen Fahrbahn 104 befindlichen Blocksegmente 112 aktiviert, so dass der Bereich der Gegenfahrbahn 106, wo sich die entgegenkommenden Verkehrsteilnehmer 110 befinden, von der Grundverteilung ausgenommen ist.

In der dritten Zeile der Tabelle aus Figur 14 sind die den verschiedenen Verkehrssituationen (vgl. Zeile 1) entsprechenden und aus der jeweiligen Ansteuerung der LEDs 82 (vgl. Zeile 2) resultierenden Grundverteilungen gezeigt, die sich aus mehr oder weniger Blocksegmenten 112 der aktivierten LEDs 82 zusammensetzen.

In der vierten Zeile der Tabelle aus Figur 14 ist ein Beispiel für die den verschiedenen Verkehrssituationen (vgl. Zeile 1) entsprechende Spotverteilung 32, 72 dargestellt. Dabei ist das Spotlicht 32, 72 in eine Vielzahl relativ schmaler Streifen, in dem dargestellten Beispiel in 20 Streifen, unterteilt. Die vollständige Spotverteilung 32, 72 deckt in horizontaler Richtung in etwa die beiden zentralen Blocksegmente 112 der Grundverteilung (vgl. Zeile 3) sowie teilweise auch die beiden daran angrenzenden Blocksegmente 112 ab. Die feine streifenförmige Unterteilung der Spotverteilung 32, 72 erlaubt es, ohne den hohen Aufwand eines Matrix-Beams jeweils eine möglichst kleine Zone der Spotverteilung 32, 72, in der andere Verkehrsteilnehmer 108, 110 detektiert wurden, gezielt aus der Lichtverteilung 32, 72 ausnehmen zu können. Die Streifen sind an ihren Rändern relativ scharf abgegrenzt, so dass sie viel dichter an die detektierten Verkehrsteilnehmer 108, 110 herangeführt werden können, als dies mit den Blocksegmenten 112 der Grundverteilung 40 (vgl. Zeile 3) des erfindungsgemäßen Grundlicht-Moduls 80 möglich ist. Die Ansteuerung des Spotlicht-Moduls 84 ist auf die Ansteuerung der LEDs der Untermodule 82 des Grundlicht-Moduls 80 abgestimmt, so dass stets in allen Verkehrssituationen (vgl. Zeile 1) eine optimale Ausleuchtung der Fahrbahn 102 vor dem Fahrzeug sichergestellt ist.

Die vorliegende Erfindung ist gut am Scheinwerfer 78 nachweisbar. Sowohl die resultierende Grundverteilung 40 als auch die Anordnung der die Grundverteilung 40 erzeugenden Unter-Module 82 sind in der Regel ohne weiteres von außen erkennbar.

In Figur 15 ist beispielhaft ein Blocksegment 112 gezeigt, um die Intensitätsverteilung innerhalb der Blocksegmente 112 zu veranschaulichen. Bevorzugt liegt ein Intensitätsmaximum 114 der ausgeleuchteten Blocksegmente 112 jeweils knapp oberhalb des Horizonts HH auf der zur Vertikalen VV gerichteten Seite der Blocksegmente 112. Dabei nimmt die Beleuchtungsstärke in horizontaler Richtung 116 und in vertikaler Richtung 118 mit zunehmendem Abstand von dem Bereich 114 des Intensitätsmaximums ab. In einem Bereich 120 etwa 3° bis 4° oberhalb einer Horizontalen HH weisen die Blocksegmente 112 jeweils eine Beleuchtungsstärke auf, die in etwa 1/3 der maximalen Beleuchtungsstärke im Bereich 114 des Intensitätsmaximums beträgt. Die Beleuchtungsstärkewerte können in denjenigen Blocksegmenten 112 im Zentrum der Grundverteilung 40 (also in der Nähe der Vertikalen VV) größer sein als in den am Rand der Lichtverteilung 40 liegenden Blocksegmenten 112. Ein Gradient der Beleuchtungsstärke der einzelnen Blocksegmente 112 auf einer zu der Vertikalen VV hin gerichteten Seite der Blocksegmente 112 ist größer als auf einer von der Vertikalen VV abgewandten Seite der Blocksegmente 112. Vorzugsweise fällt die Beleuchtungsstärke der einzelnen Blocksegmente 112 auf einer zu der Vertikalen VV hin gerichteten Seite der Blocksegmente 112 innerhalb von etwa 1° bis 3° horizontal von 95% des Intensitätsmaximums des Blocksegments 112 auf weniger als 5% des Intensitätsmaximums (blendfreies Niveau) .

Anhand Figur 16 wird deutlich, dass die Bereiche 114 der Intensitätsmaxima der einzelnen Blocksegmente 112 in der Grundverteilung 40 in horizontaler Richtung zueinander beabstandet sind. Die mit dem Bezugszeichen 40 bezeichnete Kurve entspricht dem Verlauf der Beleuchtungsstärke E der gesamten Grundverteilung der Fernlicht-Lichtverteilung, der sich aus einer Überlagerung der Beleuchtungsstärkeverläufe 122 der einzelnen Blocksegmente 112 ergibt. In der Grundverteilung 40 nebeneinander angeordnete Blocksegmente 112 können sich an ihren Rändern um etwa 1° bis 3° überlappen. Im Vergleich zu der Intensitätsverteilung der Grundverteilung 40 ist in Figur 16 auch der Verlauf der Beleuchtungsstärke E der Spotverteilung 32 beispielhaft eingezeichnet. Das Intensitätsmaximum E_40 der Grundverteilung 40 im Bereich der Vertikalen VV ist kleiner als das entsprechende Maximum E_32 der Spotverteilung 32.

Die vorliegende Erfindung betrifft einen Kraftfahrzeugscheinwerfer 78 zur Erzeugung einer Fernlicht-Lichtverteilung, der ein Lichtmodul 80 umfasst, das zur Erzeugung der Grundverteilung 40 der Fernlicht-Lichtverteilung ausgebildet ist. Die Fernlicht-Lichtverteilung ist durch eine Überlagerung der Grundverteilung und einer durch mindestens ein anderes Spot-Lichtmodul 84 erzeugten Spotverteilung 32, 72 gebildet.

Bei dem Scheinwerfer 78 ist das Lichtmodul 80 in mehrere separat ansteuerbare Unter-Module 82 unterteilt, die mehrere Blocksegmente 112 der Grundverteilung 40 erzeugen, wobei sich die Blocksegmente 112 zu der Grundverteilung 40 ergänzen, und wobei die Unter-Module 82 jeweils mindestens eine Lichtquelle 86 aufweisen und während des Betriebs des Lichtmoduls 80 die mindestens eine Lichtquelle 86 mindestens desjenigen Unter-Moduls 82' deaktiviert ist, dessen Blocksegment 112 in einer Zone liegen würde, in der ein anderer Verkehrsteilnehmer 108; 110 detektiert wurde. Dabei ist die Ansteuerung der Lichtquellen 86 der Unter-Module 82 auf die Ansteuerung des Spotlicht-Moduls 84 derart abgestimmt, dass zeitgleich mit der Deaktivierung zumindest desjenigen Teils der Spotverteilung 32, 72, der in der Zone liegen würde, in der der andere Verkehrsteilnehmer 108; 110 detektiert wurde, die mindestens eine Lichtquelle 86 des mindestens einen zu deaktivierenden Unter-Moduls 82' deaktiviert wird.

Ferner ist eine Scheinwerferanlage für ein Kraftfahrzeug denkbar, umfassend zwei in einem Frontbereich seitlich an dem Fahrzeug angeordnete Kraftfahrzeugscheinwerfer 78, die jeweils auf die oben beschriebene Art und Weise ausgebildet sind. Es wird vorgeschlagen, dass einer der beiden Scheinwerfer 78 ein Lichtmodul 80 umfasst, das die Blocksegmente 112 einer linken Seite der Grundverteilung 40 erzeugt, und der andere Scheinwerfer 78 ein anderes Lichtmodul 80 umfasst, das die Blocksegmente 112 einer rechten Seite der Grundverteilung 40 erzeugt, so dass sich die Blocksegmente 112 der Lichtmodule 80 der beiden Scheinwerfer 78 zu der gesamten Grundverteilung 40 ergänzen und/oder überlagern.

## Patentansprüche

1. Kraftfahrzeugscheinwerfer (78)mit einem Grundlicht-Modul (80) und einem Spotlicht-Modul (84), wobei das Grundlicht-Modul (80) zur Erzeugung einer Grundverteilung (40) einer Fernlicht-Lichtverteilung eingerichtet ist, wobei das Spotlicht-Modul (84) zur Erzeugung einer Spotverteilung (32,72) der Fernlicht-Lichtverteilung eingerichtet ist, wobei die Fernlicht-Lichtverteilung durch eine Überlagerung der Spotverteilung (32,72) und der Grundverteilung (40) gebildet ist, wobei das Grundlicht-Modul (80) in mehrere separat ansteuerbare Unter-Module (82) unterteilt ist, die mehrere Blocksegmente (112) der Grundverteilung (40) erzeugen, wobei mit jeweils einem Unter-Modul (82) ein Blocksegment (112) der Grundlichtverteilung (40) erzeugbar ist, welche Blocksegmente in horizontaler Richtung jeweils 3° bis 10° breit ausleuchtbare Zonen bilden, wobei sich einander benachbarte Blocksegmente (112) an ihren Rändern überlagern und sich zu der Grundverteilung (40) der Fernlicht-Verteilung ergänzen,wobei das Grundlicht-Modul (80) dazu eingerichtet ist, die Grundverteilunc (40) bei Geradeausfahrt des Kraftfahrzeugs so zu erzeugen, dass sie auf einem virtuellen, in einem Abstand vor dem Grundlicht-Modul (80) angeordneten senkrechten Messschirm eine im Wesentlichen symmetrisch zu einer Vertikalen (VV) ausgebildete Ausgestaltung aufweist und sich in horizontaler Richtung über einen Bereich von maximal etwa -30° bis +30° und minimal von etwa -10° bis +10° erstreckt und wobei die vollständige Spotverteilung (32, 72) in horizontaler Richtung die beiden zentralen Blocksegmente (112) der Grundverteilung (40) sowie teilweise auch die beiden daran angrenzenden Blocksegmente (112) abdeckt, **dadurch gekennzeichnet, dass** die Blocksegmente(112) auf einem in einem Abstand vor dem Lichtmodul (80) angeordneten senkrechten Messschirm zum Rand der Grundverteilung (40) hin eine geringere Höhe aufweisen als Blocksegmente (112) im Zentrum der Grundverteilung (40) im Bereich der Vertikalen (VV) aufweisen und dass das Spotlicht-Modul (84) dazu eingerichtet ist, die Spotverteilung (32,72) in eine Vielzahl vertikaler, abschattbarer Streifen zu unterteilen, und dass das Grundlicht-Modul (80) dazu eingerichtet ist, auf einem in einem Abstand vor dem Grundlicht-Modul (80) angeordneten senkrechten Messschirm einen Gradienten der Beleuchtungsstärke der einzelnen Blocksegmente (112) so zu erzeugen, dass sie auf einer zu der Vertikalen (VV) hin gerichteten Seite der Blocksegmente (112) größer ist als auf einer von der Vertikalen (VV) abgewandten Seite der Blocksegmente (112).

2. Kraftfahrzeugscheinwerfer (78) nach Anspruch 1, **dadurch gekennzeichnet, dass** die Unter-Module (82) jeweils mindestens eine Lichtquelle (86) aufweisen, und dass während des Betriebs des Lichtmoduls (80) die mindestens eine Lichtquelle (86) mindestens desjenigen Unter-Moduls (82') deaktiviert ist, dessen Blocksegment (112) in einer Zone liegen würde, in der ein anderer Verkehrsteilnehmer (108, 110) detektiert wurde.

3. Kraftfahrzeugscheinwerfer (78) nach Anspruch 2, **dadurch gekennzeichnet, dass** eine Aktivierung der mindestens einen Lichtquelle (86) des mindestens einen deaktivierten Unter-Moduls (82') rampenförmig erfolgt, sobald in einem Bereich des von dem mindestens einen deaktivierten Unter-Modul (82') erzeugten Blocksegments (112) kein anderer Verkehrsteilnehmer (108, 110) detektiert wurde.

4. Kraftfahrzeugscheinwerfer (78) nach einem der vorangegangenen Ansprüche, **dadurch gekennzeichnet, dass** die Unter-Module (82) jeweils mindestens eine Lichtquelle (86) aufweisen, wobei die Lichtquellen (86) als Halbleiterlichtquellen, insbesondere als Leuchtdioden (LEDs) ausgebildet sind.

5. Kraftfahrzeugscheinwerfer (78) nach einem der vorangegangenen Ansprüche, **dadurch gekennzeichnet, dass** das Grundlicht-Modul (80) dazu eingerichtet ist, die Blocksegmente (112) so zu erzeugen, dass sie auf einem in einem Abstand vor dem Grundlicht-Modul (80) angeordneten senkrechten Messschirm jeweils eine vertikale Erstreckung von mindestens 3° bis 5°, vorzugsweise von 5° bis 15° oberhalb einer Horizontalen (HH) aufweisen.

6. Kraftfahrzeugscheinwerfer (78) nach einem der vorangegangenen Ansprüche, **dadurch gekennzeichnet, dass** das Grundlicht-Modul (80) dazu eingerichtet ist, die Blocksegmente (112) so zu erzeugen, dass sie auf einem in einem Abstand vor dem Grundlicht-Modul (80) angeordneten senkrechten Messschirm jeweils in einem zu einem Schnittpunkt (HV) einer Horizontalen (HH) und einer Vertikalen (VV) hin gerichteten Bereich (114) eine maximale Intensität aufweisen, wobei die Beleuchtungsstärke in horizontaler und in vertikaler Richtung mit zunehmendem Abstand von dem Bereich (114) maximaler Intensität abnimmt.

7. Kraftfahrzeugscheinwerfer (78) nach Anspruch 6, **dadurch gekennzeichnet, dass** das Grundlicht-Modul (80) dazu eingerichtet ist, die Blocksegmente (112) so zu erzeugen, dass sie jeweils in dem Bereich (114) maximaler Intensität eine maximale Beleuchtungsstärke aufweisen, die in einem Bereich zwischen 5 lx und 40 lx, insbesondere zwischen 10 lx und 30 lx, ganz besonders bevorzugt zwischen 10 lx und 20 lx, liegt.

8. Kraftfahrzeugscheinwerfer (78) nach Anspruch 7, **dadurch gekennzeichnet, dass** das Grundlicht-Modul (80) dazu eingerichtet ist, die Blocksegmente (112) so zu erzeugen, dass sie auf einem in einem Abstand vor dem Grundlicht-Modul (80) angeordneten senkrechten Messschirm jeweils in dem Bereich einer Horizontalen (HH) eine Beleuchtungsstärke aufweisen, die in etwa 1/3 der maximalen Beleuchtungsstärke in dem Bereich (114) maximaler Intensität beträgt.

9. Kraftfahrzeugscheinwerfer (78) nach Anspruch 1, **dadurch gekennzeichnet, dass** das Grundlichtmodul dazu eingerichtet ist, die Blocksegmente (112) so zu erzeugen, dass sie jeweils einen Bereich (114) maximaler Intensität aufweisen, wobei auf einem in einem Abstand vor dem Grundlicht-Modul (80) angeordneten senkrechten Messschirm die Beleuchtungsstärke der einzelnen Blocksegmente (112) auf einer zu der Vertikalen (VV) hin gerichteten Seite der Blocksegmente (112) innerhalb von 0,5° bis 10° horizontal, insbesondere von 1° bis 5° horizontal, besonders bevorzugt von 1° bis 3° horizontal, von 95% der maximalen Intensität des Blocksegments (112) auf weniger als 5% der maximalen Intensität fällt.

10. Kraftfahrzeugscheinwerfer (78) nach einem der vorangegangenen Ansprüche, **dadurch gekennzeichnet, dass** das Grundlicht-Modul (80) dazu eingerichtet ist, die Blocksegmente (112) so zu erzeugen, dass sie jeweils einen Bereich (114) maximaler Intensität aufweisen, wobei die Bereiche (114) maximaler Intensität der einzelnen Blocksegmente (112) in der Grundverteilung (40) zueinander beabstandet sind.

11. Kraftfahrzeugscheinwerfer (78) nach einem der vorangegangenen Ansprüche, **dadurch gekennzeichnet, dass** das Grundlicht-Modul (80) dazu eingerichtet ist, die Blocksegmente (112) auf einem in einem Abstand vor dem Grundlicht-Modul (80) angeordneten senkrechten Messschirm eine rechteckige, quadratische und/oder ovale Form und/oder die Form eines Parallelogramms aufweisen.

## Claims

1. Motor vehicle headlight (78) having a basic light module (80) and a spot light module (84), the basic light module (80) being designed to generate a basic distribution (40) of a high beam light distribution, the spot light module (84) being designed to generate a spot distribution (32, 72) of the high beam light distribution, the high beam light distribution being formed by a superposition of the spot distribution (32, 72) and the basic distribution (40), the basic light module (80) being divided into a plurality of separately controllable sub-modules (82) which generate a plurality of block segments (112) of the basic distribution (40), a block segment (112) of the basic light distribution (40) being able to be generated in each case by a sub-module (82), which block segments form, in the horizontal direction, zones which can be illuminated in each case 3° to 10° wide, adjacent block segments (112) overlapping at the edges thereof and complementing one another to form the basic distribution (40) of the high beam distribution, the basic light module (80) being designed to generate the basic distribution (40) when the motor vehicle travels straight ahead in such a way that the basic distribution, on a virtual perpendicular screen arranged at a distance in front of the basic light module (80), has a design which is substantially symmetrical to a vertical (VV) formed in the horizontal direction and extends in the horizontal direction over a range of a maximum of approximately -30° to +30° and a minimum of approximately -10° to 10°, and the complete spot distribution (32, 72) covering, in the horizontal direction, the two central block segments (112) of the basic distribution (40) and partially also the two block segments (112) adjacent thereto, **characterized in that** the block segments (112) have, on a perpendicular screen arranged at a distance in front of the light module (80), a lower height toward the edge of the basic distribution (40) than block segments (112) in the center of the basic distribution (40) in the region of the vertical (VV), and **in that** the spot light module (84) is designed to divide the spot distribution (32, 72) into a plurality of vertical, shadeable strips, and **in that** the basic light module (80) is designed to generate, on a perpendicular screen arranged at a distance in front of the basic light module (80), a gradient of the illuminance of the individual block segments (112) in such a way that said illuminance is greater on a side of the block segments (112) facing the vertical (VV) than on a side of the block segments (112) facing away from the vertical (VV).

2. Motor vehicle headlight (78) according to claim 1, **characterized in that** the sub-modules (82) each have at least one light source (86), and **in that** during operation of the light module (80) the at least one light source (86) of at least the sub-module (82') of which the block segment (112) would lie in a zone in which another road user (108, 110) has been detected is deactivated.

3. Motor vehicle headlight (78) according to claim 2, **characterized in that** activation of the at least one light source (86) of the at least one deactivated sub-module (82') takes place in a ramp-like manner as soon as no other road users (108, 110) have been detected in a region of the block segment (112) generated by the at least one deactivated sub-module (82').

4. Motor vehicle headlight (78) according to any of the preceding claims, **characterized in that** the sub-modules (82) each have at least one light source (86), the light sources (86) being designed as semiconductor light sources, in particular as light-emitting diodes (LEDs).

5. Motor vehicle headlight (78) according to any of the preceding claims, **characterized in that** the basic light module (80) is designed to generate the block segments (112) in such a way that they each have, on a perpendicular screen arranged at a distance in front of the basic light module (80), a vertical extension of at least 3° to 5°, preferably 5° to 15°, above a horizontal (HH).

6. Motor vehicle headlight (78) according to any of the preceding claims, **characterized in that** the basic light module (80) is designed to generate the block segments (112) in such a way that they have, on a perpendicular screen arranged at a distance in front of the basic light module (80), a maximum intensity in a region (114) directed toward an intersection point (HV) of a horizontal (HH) and a vertical (VV), the illuminance decreasing in the horizontal direction and in the vertical direction with increasing distance from the region (114) of maximum intensity.

7. Motor vehicle headlight (78) according to claim 6, **characterized in that** the basic light module (80) is designed to generate the block segments (112) in such a way that they each have, in the region (114) of maximum intensity, a maximum illuminance which is in a range between 5 lx and 40 lx, in particular between 10 lx and 30 lx, very particularly preferably between 10 lx and 20 lx.

8. Motor vehicle headlight (78) according to claim 7, **characterized in that** the basic light module (80) is designed to generate the block segments (112) in such a way that they each have, on a perpendicular screen arranged at a distance in front of the basic light module (80) and in the region of a horizontal (HH), an illuminance which is approximately 1/3 of the maximum illuminance in the region (114) of maximum intensity.

9. Motor vehicle headlight (78) according to claim 1, **characterized in that** the basic light module is designed to generate the block segments (112) in such a way that they each have a region (114) of maximum intensity, the illuminance of the individual block segments (112) on a side of the block segments (112) directed toward the vertical (VV) falling, on a perpendicular screen arranged at distance in front of the basic light module (80), from 95% of the maximum intensity of the block segment (112) to less than 5% of the maximum intensity within 0.5° to 10° horizontally, in particular from 1° to 5° horizontally, particularly preferably from 1° to 3° horizontally.

10. Motor vehicle headlight (78) according to any of the preceding claims, **characterized in that** the basic light module (80) is designed to generate the block segments (112) in such a way that they each have a region (114) of maximum intensity, the regions (114) of maximum intensity of the individual block segments (112) being spaced apart from one another in the basic distribution (40) .

11. Motor vehicle headlight (78) according to any of the preceding claims, **characterized in that** the basic light module (80) is designed, the block segments (112) have, on a perpendicular screen arranged at a distance in front of the basic light module (80), a rectangular, square and/or oval shape and/or the shape of a parallelogram.

## Revendications

1. Projecteur de véhicule automobile (78) avec un module de lumière de base (80) et un module de lumière spot (84), le module de lumière de base (80) étant agencé pour produire une distribution de base (40) d'une distribution lumineuse de feux de route, le module de lumière spot (84) étant agencé pour une distribution spot (32, 72) de la distribution lumineuse de feux de route, la distribution lumineuse de feux de route étant formée par une superposition de la distribution spot (32, 72) et de la distribution de base (40), le module de lumière de base (80) étant divisé en plusieurs sous-modules (82) pouvant être commandés séparément et qui produisent plusieurs segments de bloc (112) de la distribution de base (40), un segment de bloc (112) de la distribution de lumière de base (40) pouvant être produit par un sous-module (82) respectif, lesquels segments de bloc formant chacun, en direction horizontale, des zones à illuminer d'une largeur de 3° à 10°, des segments de bloc (112) avoisinants se chevauchant à leurs bords et se complétant pour la distribution de base (40) de la distribution lumineuse de feux de route, le module de lumière de base (80) étant agencé pour produire la distribution de base (40), en marche en ligne droite du véhicule automobile, de façon telle qu'elle présente, sur un écran de mesure virtuel vertical disposé à une distance devant le module de lumière de base (80), une forme sensiblement symétrique par rapport à une verticale (VV) et qu'elle s'étende dans la direction horizontale sur une zone d'environ -30° à +30° au maximum et d'environ -10° à +10° au minimum, la distribution spot (32, 72) complète recouvrant dans la direction horizontale les deux segments de bloc (112) centraux de la distribution de base (40) et, partiellement, aussi les deux segments de bloc (112) avoisinants, **caractérisé en ce que** les segments de bloc (112) présentent, sur un écran de mesure vertical disposé à une distance devant le module de lumière (80), vers un bord de la distribution de base (40), une hauteur moins grande que des segments de bloc (112) au centre de la distribution de base (40) dans la zone de la verticale (VV) et **en ce que** le module de lumière spot (84) est agencé pour diviser la distribution spot (32, 72) en une pluralité de bandes verticales pouvant être occultées et **en ce que** le module de lumière de base (80) est agencé pour produire, sur un écran de mesure vertical disposé à une distance devant le module de lumière de base (80), un gradient de l'intensité d'éclairage des différents segments de bloc (112) de façon telle qu'elle soit plus grande sur un côté des segments de bloc (112) orienté vers la verticale (VV) que sur un côté des segments de bloc (112) détourné de la verticale (VV).

2. Projecteur de véhicule automobile (78) selon la revendication 1, **caractérisé en ce que** les sous-modules (82) comprennent chacun au moins une source de lumière (86) et **en ce que**, pendant le fonctionnement du module de lumière (80), ladite au moins une source de lumière (86) d'au moins celui (82') des sous-modules est désactivé dont le segment de bloc (112) serait situé dans une zone dans laquelle un autre usager de la route (108, 110) a été détecté.

3. Projecteur de véhicule automobile (78) selon la revendication 2, **caractérisé en ce qu'**une activation de ladite au moins une source de lumière (86) dudit au moins un sous-module (82') désactivé est faite en forme de rampes dès que, dans une zone du segment de bloc (112) produit par ledit au moins un sous-module (82') désactivé, aucun autre usager de la route (108, 110) a été détecté.

4. Projecteur de véhicule automobile (78) selon l'une des revendications précédentes, **caractérisé en ce que** les sous-modules (82) comprennent au moins une source de lumière (86), les sources de lumière (86) étant configurées comme source de lumière à semi-conducteurs, notamment comme diodes électroluminescentes (DEL).

5. Projecteur de véhicule automobile (78) selon l'une des revendications précédentes, **caractérisé en ce que** le module de lumière de base (80) est agencé pour produire les segments de bloc de façon telle qu'ils présentent chacun, sur un écran de mesure vertical disposé à une distance devant le module de lumière de base (80), une étendue verticale d'au moins 3° à 5°, de préférence de 5° à 15° au-dessus d'une horizontale (HH).

6. Projecteur de véhicule automobile (78) selon l'une des revendications précédentes, **caractérisé en ce que** le module de lumière de base (80) est agencé pour produire les segments de bloc de façon telle qu'ils présentent chacun, sur un écran de mesure vertical disposé à une distance devant le module de lumière de base (80), une intensité maximale dans une zone (114) orientée vers une intersection (HV) d'une horizontale (HH) avec une verticale (VV), l'intensité d'éclairage s'amenuisant dans les directions horizontale et verticale en s'éloignant de la zone (114) à intensité maximale.

7. Projecteur de véhicule automobile (78) selon la revendication 6, **caractérisé en ce que** le module de lumière de base (80) est agencé pour produire les segments de bloc (112) de façon telle qu'ils présentent chacun, dans la zone (114) d'intensité maximale, une luminosité maximale qui est située dans une plage entre 5 lx et 40 lx, notamment entre 10 lx et 30 lx, de manière particulièrement préférée entre 10 lx et 20 lx.

8. Projecteur de véhicule automobile (78) selon la revendication 7, **caractérisé en ce que** le module de lumière de base (80) est agencé pour produire les segments de bloc (112) de façon telle qu'ils présentent chacun, sur un écran de mesure vertical disposé à une distance devant le module de lumière de base (80), dans la zone d'une horizontale (HH), une intensité lumineuse qui est environ d'un tiers de la luminosité maximale dans la zone (114) d'intensité maximale.

9. Projecteur de véhicule automobile (78) selon la revendication 1, **caractérisé en ce que** le module de lumière de base (80) est agencé pour produire les segments de bloc (112) de façon telle qu'ils présentent chacun une zone (114) d'intensité maximale, l'intensité lumineuse des différents segments de bloc (112) décroissant, sur un écran de mesure vertical disposé à une distance devant le module de lumière de base (80), sur un côté des segments de bloc (112) orienté vers la verticale (VV), dans une plage de 0,5° à 10° horizontalement, notamment de 1° à 5° horizontalement, de manière particulièrement préférée de 1° à 3° horizontalement, de 95% de l'intensité maximale du segment de bloc (112) à moins de 5% de l'intensité maximale.

10. Projecteur de véhicule automobile (78) selon l'une des revendications précédentes, **caractérisé en ce que** le module de lumière de base (80) est agencé pour produire les segments de bloc (112) de façon telle qu'ils présentent chacun une zone (114) d'intensité maximale, les zones (114) d'intensité maximale des différents segments de bloc (112) étant espacées les unes des autres dans la distribution de base (40).

11. Projecteur de véhicule automobile (78) selon l'une des revendications précédentes, **caractérisé en ce que** le module de lumière de base (80) est agencé de façon que les segments de bloc (112) présentent, sur un écran de mesure vertical disposé à une distance devant le module de lumière de base (80), une forme rectangulaire, carrée et/ou ovale et/ou la forme d'un parallélogramme.
